# EUROPEAN PATENT APPLICATION

(11) **EP 4 661 514 A1**
(43) Date of publication of application: **10.12.2025**
(21) Application number: 24749619.3
(22) Date of filing: 26.01.2024
(51) Int. Cl.: H04W 52/14

(54) **METHOD AND DEVICE USED FOR WIRELESS COMMUNICATION**

(30) Priority: 02.02.2023 CN 202310087607; 10.02.2023 CN 202310108805
(71) Applicant: Apogee Networks, LLC, Dallas, TX 75201 (US)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2024/074183
(87) International publication number: WO 2024/160138

(57) **Abstract**

Disclosed in the present application are a method and device used for wireless communication. A first node receives a first information block, and sends a first signal on a first cell after a first time unit set. The first information block is used to determine the first time unit set; transmit power of the first signal is the smallest value between a first reference power and a first power threshold, the first reference power depends on the first time unit set, and the first node does not send at least a PUSCH on the first cell in the first time unit set. The described method has the advantages that uplink power control is enhanced, the reliability of uplink transmission is improved, and interference is reduced.

## Description

### Technical Field

The present application relates to a transmission method and apparatus in a wireless communication system, and in particular to a transmission method and apparatus for wireless signals in a wireless communication system supporting a cellular network.

### Background Art

Uplink power control is an important technical means in a 3GPP (3rd Generation Partner Project) LTE (Long-term Evolution) and NR (New Radio) systems. The uplink transmit power is adjusted through open-loop and closed-loop methods, ensuring that the received power requirements are met while minimizing the interference to other users.

In NR R (Release) 18, research work on network energy efficiency began, and the technical enhancement in aspects such as a time domain, a frequency domain, a spatial domain, and a power domain is studied to save network power consumption.

### Summary of the Invention

The applicant found through research that in a network energy-saving mode, UE (User Equipment) does not send at least a PUSCH (Physical Uplink Shared Channel) within a certain period of time. In this scenario, the existing uplink power control needs to be enhanced. In view of the above problem, the present application discloses a solution. It should be noted that although the network energy-saving mode is described above as an example, the present application can also be applied to other scenarios, for example, a traditional non-energy-saving mode. Furthermore, using a unified design scheme for different scenarios (including but not limited to, the network energy-saving mode and the traditional non-energy-saving mode) can also help to reduce hardware complexity and costs. In the case of no conflict, embodiments and features in the embodiments in any node of the present application can be applied to any other node. In the absence of conflicts, the embodiments and features in the embodiments of the present application may be arbitrarily combined with each other.

As one embodiment, the interpretation of the terminology in the present application is based on the definition of the 3GPP standard protocol TS36 series.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminology in the present application is based on the definition of the specification protocol of the IEEE (Institute of Electrical and Electronics Engineers).

The present application discloses a method used in a first node for wireless communication, comprising:
receiving a first information block, the first information block being used to determine a first time unit set; and
sending a first signal on a first cell after the first time unit set,
wherein transmit power of the first signal is the smallest value between a first reference power and a first power threshold, the first reference power depends on the first time unit set, and the first node does not send at least a PUSCH on the first cell in the first time unit set.

As one embodiment, in a scenario where the first node does not send at least a PUSCH on the first cell in the first time unit set, how to determine the transmit power of the first signal is a problem that needs to be solved.

As one embodiment, the above method solves this problem by enabling the transmit power of the first signal to depend on the first time unit set.

As one embodiment, the benefits of the above method comprise: enhancing the uplink power control and improving the reliability and spectral efficiency of uplink transmission.

As one embodiment, the benefit of the above method comprises: reducing interference to other users.

As one embodiment, the benefit of the above method comprises: saving signaling overhead.

As one embodiment, the benefits of the above method comprise: ensuring good compatibility and improving system performance.

According to one aspect of the present application, the first reference power is equal to the sum of at least two components, and whether the at least two components comprise a first component depends on the first time unit set.

As one embodiment, the benefits of the above method comprise: reasonably determining whether to adopt TPC-based power control adjustment/closed-loop power control, improving the reliability of uplink transmission and reducing interference.

According to one aspect of the present application, the first reference power is equal to the sum of at least two components, the at least two components comprise the first component, and the first component depends on the first time unit set.

As one embodiment, the benefits of the above method comprise: reasonably determining the magnitude of power control adjustment state/closed-loop power control, improving the reliability of uplink transmission and reducing interference.

According to one aspect of the present application, the first reference power is equal to the sum of at least two components, the at least two components comprise a second component, the second component is related to a first pathloss, a target RS resource is used to determine the first pathloss, and the target RS resource is related to the first time unit set.

As one embodiment, the benefits of the above method comprise: reasonably determining an RS resource used for pathloss measurement, improving the reliability of uplink transmission and reducing interference.

According to one aspect of the present application, the method is characterized by comprising:
receiving first DCI, wherein the first DCI is used to determine a time domain resource occupied by the first signal,
wherein the first DCI comprises a first field, and whether the first reference power depends on the first field in the first DCI is related to the first time unit set.

According to one aspect of the present application, a value of the first field in the first DCI is related to the first time unit set.

According to one aspect of the present application, the above method is characterized in that the first node is user equipment.

According to one aspect of the present application, the above method is characterized in that the first node is a relay node.

The present application discloses a method used in a second node for wireless communication, comprising:
sending a first information block, the first information block being used to determine a first time unit set; and
receiving a first signal on a first cell after the first time unit set,
wherein transmit power of the first signal is the smallest value between a first reference power and a first power threshold, the first reference power depends on the first time unit set, and a sender of the first signal does not send at least a PUSCH on the first cell in the first time unit set.

According to one aspect of the present application, the first reference power is equal to the sum of at least two components, and whether the at least two components comprise a first component depends on the first time unit set.

According to one aspect of the present application, the first reference power is equal to the sum of at least two components, the at least two components comprise the first component, and the first component depends on the first time unit set.

According to one aspect of the present application, the first reference power is equal to the sum of at least two components, the at least two components comprise a second component, the second component is related to a first pathloss, a target RS resource is used to determine the first pathloss, and the target RS resource is related to the first time unit set.

According to one aspect of the present application, the method is characterized by comprising:
sending first DCI, wherein the first DCI is used to determine a time domain resource occupied by the first signal,
wherein the first DCI comprises a first field, and whether the first reference power depends on the first field in the first DCI is related to the first time unit set.

According to one aspect of the present application, a value of the first field in the first DCI is related to the first time unit set.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

The present application discloses a first node used for wireless communication, comprising:
a first receiver receiving a first information block, the first information block being used to determine a first time unit set; and
a first transmitter sending a first signal on a first cell after the first time unit set,
wherein transmit power of the first signal is the smallest value between a first reference power and a first power threshold, the first reference power depends on the first time unit set, and the first node does not send at least a PUSCH on the first cell in the first time unit set.

The present application discloses a second node used for wireless communication, comprising:
a second transmitter sending a first information block, the first information block being used to determine a first time unit set; and
a second receiver receiving a first signal on a first cell after the first time unit set,
wherein transmit power of the first signal is the smallest value between a first reference power and a first power threshold, the first reference power depends on the first time unit set, and a sender of the first signal does not send at least a PUSCH on the first cell in the first time unit set.

As one embodiment, compared with the traditional solution, the present application has the following advantages:
The uplink power control is enhanced, and the reliability and spectral efficiency of uplink transmission are improved.

Interference to other users is reduced.

Signaling overhead is saved.

Good compatibility is ensured, and system performance is improved.

### Brief Description of the Drawings

Other features, purposes and advantages of the present application will become more apparent from reading the detailed description of the non-limiting embodiments made with reference to the following drawings:
FIG. 1 shows a flow chart of a first information block and a first signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows transmission between a first node and a second node according to one embodiment of the present application;
FIG. 6 shows a schematic diagram of a first information block being used to determine a first time unit set according to one embodiment of the present application;
FIG. 7 shows a schematic diagram of a first reference power depending on a first time unit set according to one embodiment of the present application;
FIG. 8 shows a schematic diagram of a first reference power depending on a first time unit set according to one embodiment of the present application;
FIG. 9 shows a schematic diagram of a first reference power depending on a first time unit set according to one embodiment of the present application;
FIG. 10 shows a schematic diagram of a relationship between a first reference power and a first time unit set according to one embodiment of the present application;
FIG. 11 shows a schematic diagram of a first reference power according to one embodiment of the present application;
FIG. 12 shows a schematic diagram of a relationship between a first reference power and a first time unit set according to one embodiment of the present application;
FIG. 13 shows a schematic diagram in which a value of a first field in first DCI is related to a first time unit set according to one embodiment of the present application;
FIG. 14 shows a structural block diagram of a processing unit used in a first node according to one embodiment of the present application; and
FIG. 15 shows a structural block diagram of a processing unit used in a second node according to one embodiment of the present application.

### Detailed Description of Embodiments

The technical solution of the present application will be further described in detail below in conjunction with the accompanying drawings. It should be noted that, in the case of no conflict, embodiments and features in the embodiments of the present application may be arbitrarily combined with each other.

### Embodiment 1

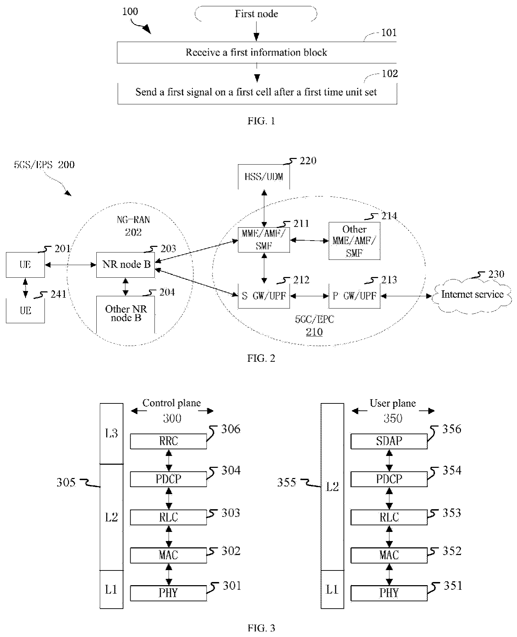

Embodiment 1 illustrates a flow chart of a first information block and a first signal according to one embodiment of the present application, as shown in FIG. 1. In 100 shown in FIG. 1, each block represents one step. In particular, the order of steps in the blocks does not represent a specific time sequence relation between the steps.

In Embodiment 1, the first node in the present application receives a first information block in step 101; and sends a first signal on a first cell after the first time unit set in step 102. The first information block is used to determine the first time unit set; and transmit power of the first signal is the smallest value between a first reference power and a first power threshold, the first reference power depends on the first time unit set, and the first node does not send at least a PUSCH on the first cell in the first time unit set.

As one embodiment, the first information block is carried by a higher layer signaling.

As one embodiment, the first information block is carried by RRC (Radio Resource Control) signaling.

As one embodiment, the first information block comprises information in all or part of fields in one RRC IE (Information Element).

As one embodiment, the first information block comprises information in all or parts of fields in each of a plurality of RRC IEs.

As one embodiment, the first information block is carried by an MAC CE (Medium Access Control Layer Control Element).

As one embodiment, the first information block comprises an MAC CE.

As one embodiment, the first information block is carried by DCI (Downlink Control Information).

As one embodiment, the first information block comprises DCI.

As one embodiment, the first information block comprises information in one or more fields in a piece of DCI.

As one embodiment, the first information block is carried by the RRC signaling and the MAC CE.

As one embodiment, the first information block is carried by the higher layer signaling and the DCI.

As one embodiment, the first information block is cell-specific.

As one embodiment, the first information block is UE-group common.

As one embodiment, the first information block is UE-specific.

As one embodiment, the first information block indicates the first time unit set.

As one embodiment, the first information block explicitly indicates the first time unit set.

As one embodiment, the first information block implicitly indicates the first time unit set.

As one embodiment, the first information block indicates the first time unit set by indicating other information.

As one embodiment, a parameter in the first information block is used to determine the first time unit set.

As one embodiment, the first information block indicates the first time unit set by indicating at least one parameter.

As one embodiment, the first information block indicates a first length and a first period, and the first length and the first period are used to determine the first time unit set; and the first length and the first period are respectively positive real numbers.

As one embodiment, the first length is used to determine a length of the first time unit set.

As one embodiment, the first length is used to determine the numbers of time units comprised in the first time unit set.

As one embodiment, the first length is used to determine a length of a time domain resource occupied by the first time unit set.

As one embodiment, the first period is used to determine which time units are comprised in the first time unit set.

As one embodiment, the first information block is used to activate a cell DRX (Discontinuous Reception).

As one embodiment, the first information block is used to activate at least one cell DRX.

As one embodiment, the first time unit set comprises at least one time unit.

As one embodiment, the first time unit set comprises only one time unit.

As one embodiment, the first time unit set comprises a plurality of time units.

As one embodiment, the first time unit set comprises a plurality of consecutive time units.

As one embodiment, the first time unit set comprises a plurality of discontinuous time units.

As one embodiment, the first time unit set is composed of a plurality of consecutive time units.

As one embodiment, the first time unit set occupies consecutive time domain resources.

As one embodiment, the first time unit set occupies discontinuous time domain resources.

As one embodiment, the time unit refers to a symbol.

As one embodiment, the time unit refers to an OFDM (Orthogonal Frequency Division Multiplexing) symbol.

As one embodiment, the time unit refers to: a symbol obtained after an output of transform precoding undergoes the generation of the OFDM symbol.

As one embodiment, the time unit refers to a slot.

As one embodiment, the time unit refers to a sub-frame.

As one embodiment, the time unit refers to millisecond (ms).

As one embodiment, the PUSCH refers to a Physical Uplink Shared Channel.

As one embodiment, the first node does not perform uplink transmission on the first cell in the first time unit set.

As one embodiment, the first node does not send a wireless signal on the first cell in the first time unit set.

As one embodiment, the first node turns off uplink transmission on the first cell in the first time unit set.

As one embodiment, the first node does not send a PUSCH and a PUCCH (Physical Uplink Control Channel) on the first cell in the first time unit set.

As one embodiment, the first node does not send a PUSCH, a PUCCH, and an SRS (Sounding Reference Signal) on the first cell in the first time unit set.

As one embodiment, the first node does not send a PUSCH, a PUCCH, an SRS, and a PRACH (Physical Random Access Channel) on the first cell in the first time unit set.

As one embodiment, the first node does not send a periodic and semi-persistent SRS on the first cell in the first time unit set.

As one embodiment, the first node does not report CSI on the first cell in the first time unit set.

As one embodiment, the first node does not report periodic and semi-persistent CSI (Channel State Information) on the first cell in the first time unit set.

As one embodiment, the first node considers that a signal sent on the first cell in the first time unit set will not be received or processed.

As one embodiment, the first node considers that a PUSCH sent on the first cell in the first time unit set will not be received or processed.

As one embodiment, the first node considers that a PUCCH sent on the first cell in the first time unit set will not be received or processed.

As one embodiment, the first node considers that an SRS sent on the first cell in the first time unit set will not be received or processed.

As one embodiment, the first node considers that a periodic SRS sent on the first cell in the first time unit set will not be received or processed.

As one embodiment, the first node considers that a periodic and semi-persistent SRS sent on the first cell in the first time unit set will not be received or processed.

As one embodiment, the first node considers that CSI reported on the first cell in the first time unit set will not be received or processed.

As one embodiment, the first node considers that periodic CSI reported on the first cell in the first time unit set will not be received or processed.

As one embodiment, the first node considers that periodic and semi-persistent CSI reported on the first cell in the first time unit set will not be received or processed.

As one embodiment, the first cell turns off uplink reception in the first time unit set.

As one embodiment, the first cell does not receive or process an uplink signal in the first time unit set.

As one embodiment, the first cell does not receive or process a PUSCH in the first time unit set.

As one embodiment, the first cell does not receive or process a PUSCH and a PUCCH in the first time unit set.

As one embodiment, the first cell does not receive or process a PUSCH, a PUCCH, and an SRS in the first time unit set.

As one embodiment, the first cell does not receive or process a periodic and semi-persistent SRS in the first time unit set.

As one embodiment, the first cell does not receive or process CSI reports in the first time unit set.

As one embodiment, the first cell does not receive or process periodic and semi-persistent CSI reports in the first time unit set.

As one embodiment, the phrase "not sending at least a PUSCH" means that at least PUSCH transmission is not performed.

As one embodiment, the phrase "not sending at least a PUSCH" means that no signal is sent in at least a PUSCH.

As one embodiment, the phrase "not sending at least a PUSCH" means that no signal whose occupied physical channel is at least a PUSCH is sent.

As one embodiment, the phrase "not sending a PUSCH/PUCCH/PRACH" means that PUSCH/PUCCH/PRACH transmission is not performed.

As one embodiment, the phrase "not sending a PUSCH/PUCCH/PRACH" means that no signal is sent in the PUSCH/PUCCH/PRACH.

As one embodiment, the phrase "not sending a PUSCH/PUCCH/PRACH" means that no signal whose occupied physical channel is the PUSCH/PUCCH/PRACH is sent.

As one embodiment, the phrase "PUSCH/PUCCH that is sent" means that a signal is sent in the PUSCH/PUCCH.

As one embodiment, the first node does not perform uplink transmission on the first cell in a first time unit subset of the first time unit set.

As one embodiment, the first node turns off uplink transmission on the first cell in a first time unit subset of the first time unit set.

As one embodiment, the first node does not send a PUSCH and a PUCCH on the first cell in a first time unit subset of the first time unit set.

As one embodiment, the first node does not send a PUSCH, a PUCCH, and an SRS on the first cell in a first time unit subset of the first time unit set.

As one embodiment, the first node does not send a PUSCH, a PUCCH, an SRS, and a PRACH on the first cell in a first time unit subset of the first time unit set.

As one embodiment, the first node does not send a periodic and semi-persistent SRS on the first cell in a first time unit subset of the first time unit set.

As one embodiment, the first node does not report CSI on the first cell in a first time unit subset of the first time unit set.

As one embodiment, the first node does not report periodic and semi-persistent CSI on the first cell in a first time unit subset of the first time unit set.

As one embodiment, the first node considers that a signal sent on the first cell in a first time unit subset of the first time unit set will not be received or processed.

As one embodiment, the first node considers that a PUSCH sent on the first cell in a first time unit subset of the first time unit set will not be received or processed.

As one embodiment, the first node considers that a PUCCH sent on the first cell in a first time unit subset of the first time unit set will not be received or processed.

As one embodiment, the first node considers that an SRS sent on the first cell in a first time unit subset of the first time unit set will not be received or processed.

As one embodiment, the first node considers that a periodic and semi-persistent SRS sent on the first cell in a first time unit subset of the first time unit set will not be received or processed.

As one embodiment, the first node considers that CSI reported on the first cell in a first time unit subset of the first time unit set will not be received or processed.

As one embodiment, the first node considers that periodic and semi-persistent CSI reported on the first cell in a first time unit subset of the first time unit set will not be received or processed.

As one embodiment, the first cell turns off uplink reception in a first time unit subset of the first time unit set.

As one embodiment, the first cell does not receive or process an uplink signal in a first time unit subset of the first time unit set.

As one embodiment, the first cell does not receive or process a PUSCH in a first time unit subset of the first time unit set.

As one embodiment, the first cell does not receive or process a PUCCH in a first time unit subset of the first time unit set.

As one embodiment, the first cell does not receive or process an SRS in a first time unit subset of the first time unit set.

As one embodiment, the first cell does not receive or process a periodic and semi-persistent SRS in a first time unit subset of the first time unit set.

As one embodiment, the first cell does not receive or process CSI reports in a first time unit subset of the first time unit set.

As one embodiment, the first cell does not receive or process periodic and semi-persistent CSI reports in a first time unit subset of the first time unit set.

As one embodiment, the first time unit subset is a subset of the first time unit set.

As one embodiment, the first time unit subset comprises at least one time unit in the first time unit set.

As one embodiment, the first time unit subset comprises only one time unit in the first time unit set.

As one embodiment, the first time unit subset comprises a plurality of time units in the first time unit set.

As one embodiment, the first time unit set is the first time unit subset.

As one embodiment, the first time unit set comprises at least one time unit that does not belong to the first time unit subset.

As one embodiment, the first node sends at least one of a PUCCH, an SRS, a or PRACH on the first cell in the first time unit set.

As one embodiment, the first node sends a signal in at least one of a PUCCH or a PRACH, or sends an SRS, on the first cell in the first time unit set.

As one embodiment, the first node does not monitor a PDCCH (Physical Downlink Control Channel) in at least one time unit in the first time unit set.

As one embodiment, the first time unit set comprises a partial inactive time of a cell DRX.

As one embodiment, the first time unit set belongs to an inactive time of a cell DRX.

As one embodiment, the first time unit set comprises an inactive time within one cycle of a cell DRX.

As one embodiment, the first time unit set is an inactive time within one period of a cell DRX.

As one embodiment, the first time unit set does not comprise an active time of a cell DRX.

As one embodiment, the first node maintains uplink sending during the active time of the cell DRX.

As one embodiment, the first node turns off uplink sending during the inactive time of the cell DRX.

As one embodiment, the first node does not send a PUSCH during the inactive time of the cell DRX.

As one embodiment, the first node does not send a periodic and semi-persistent SRS during the inactive time of the cell DRX.

As one embodiment, the first node does not report periodic and semi-persistent CSI during the inactive time of the cell DRX.

As one embodiment, the first node enters an energy-saving mode during the inactive time of the cell DRX.

As one embodiment, the first cell maintains uplink reception during the active time of the cell DRX.

As one embodiment, the first cell turns off uplink reception during the inactive time of the cell DRX.

As one embodiment, the first cell does not receive or process an uplink signal during the inactive time of the cell DRX.

As one embodiment, the first cell enters an energy-saving mode during the inactive time of the cell DRX.

As one embodiment, the first node considers that the uplink signal sent during the inactive time of the cell DRX will not be received or processed.

As one embodiment, the first node considers that the PUSCH sent during the inactive time of the cell DRX will not be received or processed.

As one embodiment, the first node considers that the periodic and semi-persistent SRS sent during the inactive time of the cell DRX will not be received or processed.

As one embodiment, the first node considers that the periodic and semi-persistent CSI reported during the inactive time of the cell DRX will not be received or processed.

As one embodiment, the first time unit set comprises a partial inactive time of a cell DTX (Discontinuous Transmission).

As one embodiment, the first time unit set comprises a partial active time of a cell DTX.

As one embodiment, the first node monitors a PDCCH during the active time of the cell DTX.

As one embodiment, the first node does not monitor a PDCCH during the inactive time of the cell DTX.

As one embodiment, the first node is in an awake state during the active time of the cell DTX.

As one embodiment, the first node is not in an awake state during the inactive time of the cell DTX.

As one embodiment, the first cell maintains downlink sending during the active time of the cell DTX.

As one embodiment, the first cell turns off downlink sending during the inactive time of the cell DTX.

As one embodiment, the first cell enters an energy-saving mode during the inactive time of the cell DTX.

As one embodiment, the first cell is one serving cell of the first node.

As one embodiment, the first cell is a PCell (Primary Cell) of the first node.

As one embodiment, the first cell is an SpCell (Special Cell) of the first node.

As one embodiment, the first cell is an SCell (Secondary Cell) of the first node.

As one embodiment, a PCI (Physical Cell Identifier) of the first cell is different from a PCI of a serving cell of the first node.

As one embodiment, the first cell is a cell configured by *SSB-MTC-AdditionalPCI* with a PCI different from a PCI of a serving cell of the first node.

As one embodiment, the first signal comprises a baseband signal.

As one embodiment, the first signal comprises a wireless signal.

As one embodiment, the first signal comprises a radio frequency signal.

As one embodiment, a physical channel occupied by the first signal comprises a PUSCH.

As one embodiment, a physical channel occupied by the first signal comprises a PUCCH.

As one embodiment, a physical channel occupied by the first signal comprises a PRACH (Physical Random Access Channel).

As one embodiment, the first signal comprises an SRS.

As one embodiment, a first symbol occupied by the first signal is later than a last symbol in the first time unit set.

As one embodiment, the first node does not perform transmission on the first cell between the first signal and the first time unit set.

As one embodiment, the first node does not send a PUSCH on the first cell between the first signal and the first time unit set.

As one embodiment, the first signal occupies a first uplink symbol after the first time unit set.

As one embodiment, the first signal occupies a first uplink slot after the first time unit set.

As one embodiment, a power control adjustment state is not reset between the first signal and the first time unit set.

As one embodiment, no configuration or reconfiguration of P0 or alpha is provided at a higher layer between the first signal and the first time unit set.

As one embodiment, the unit of the transmit power of the first signal is dBm (decibel milliwatts).

As one embodiment, the unit of the first reference power is dBm (decibel milliwatts).

As one embodiment, the unit of the first power threshold is dBm (decibel milliwatts).

As one embodiment, the first power threshold is a maximum output power configured for the first node.

As one embodiment, the first power threshold is *P_{CMAX,f,c}*(*i*).

As one embodiment, the first signal is transported in a transmission occasion i in an active uplink BWP *b* (BandWidth Part) of a carrier *f* of the cell *c*.

As one embodiment, the first power threshold is *P_{CMAX}.*

As one embodiment, the first power threshold depends on the first time unit set.

As one embodiment, the phrase "depending on the first time unit set" means: depending on a length of the first time unit set.

As one embodiment, the length of the first time unit set refers to: the number of the time units comprised in the first time unit set.

As one embodiment, the length of the first time unit set refers to: a length of a time domain resource occupied by the first time unit set.

As one embodiment, the length of the first time unit set refers to: duration of a time domain resource occupied by the first time unit set.

As one embodiment, the phrase "depending on the first time unit set" means: depending on whether the first node performs uplink transmission on the first cell between the first signal and the first time unit set.

As one embodiment, the phrase "depending on the first time unit set" means: depending on whether the first node sends a PUSCH on the first cell between the first signal and the first time unit set.

As one embodiment, the phrase "depending on the first time unit set" means: depending on whether the first signal occupies a first uplink symbol after the first time unit set.

As one embodiment, the phrase "depending on the first time unit set" means: depending on whether the first signal occupies a first uplink slot after the first time unit set.

As one embodiment, the phrase "depending on the first time unit set" means: depending on whether the first signal occupies a first symbol after the first time unit set that is configured as UL (uplink) by *tdd-UL-DL-ConfigurationCommon* or *tdd-UL-DL-ConfigurationDedicated.*

As one embodiment, the phrase "depending on the first time unit set" means: depending on whether the first signal occupies a first symbol after the first time unit set that is configured as UL (uplink) by *tdd-UL-DL-ConfigurationCommon* or *tdd-UL-DL-ConfigurationDedicated* or a first symbol that is configured as flexible by *tdd-UL-DL-ConfigurationCommon* or *tdd-UL-DL-ConfigurationDedicated* and in which the first node is indicated or scheduled to perform uplink transmission.

As one embodiment, the phrase "depending on the first time unit set" means: depending on the length of the first time unit set and whether the first node performs uplink transmission on the first cell between the first signal and the first time unit set.

As one embodiment, the phrase "depending on the first time unit set" means: depending on the length of the first time unit set and whether the first node sends a PUSCH on the first cell between the first signal and the first time unit set.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 communicating with the UE201 via a sidelink, an NG-RAN (Next-Generation Radio Access Network) 202, a 5GC (5G CoreNetwork)/EPC (Evolved Packet Core) 210, an HSS (Home Subscriber Server)/UDM (Unified Data Management)220, and an Internet service 230. The 5GS/EPS200 may be interconnected with other access networks, but these entities/interfaces are not shown for simplicity. As shown in FIG. 2, the 5GS/EPS200 provides packet switching services, but those skilled in the art will readily appreciate that various concepts presented throughout the present application can be extended to networks that provide circuit switching services. The NG-RAN202 comprises NR (New Radio) Node B (gNB)203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smartphone, a Session Initiation Protocol (SIP) phone, a laptop computer, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem) and a packet switching service.

As one embodiment, the first node in the present application comprises the UE201.

As one embodiment, a second node in the present application comprises the gNB203.

As one embodiment, a radio link between the UE201 and the gNB203 comprises a cellular network link.

As one embodiment, a sender of the first information block comprises the gNB203.

As one embodiment, a recipient of the first information block comprises the UE201.

As one embodiment, a sender of the first signal comprises the UE201.

As one embodiment, a recipient of the first signal comprises the gNB203.

As one embodiment, the UE201 supports Energy Saving on the base station side.

As one embodiment, the UE201 supports the cell DRX.

As one embodiment, the gNB203 supports Energy Saving on the base station side.

As one embodiment, the gNB203 supports the cell DRX.

### Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X), or between two pieces of UE, using three layers: Layer 1, Layer 2, and Layer 3. The Layer 1 (L1 layer)is the lowest layer and implements various PHY (Physical Layer) signal processing functions. The L1 layer will be referred to as a PHY301 herein. The Layer 2 (L2 layer) 305 is above the PHY301 and is responsible for a link between the first communication node device and the second communication node device, or between two pieces of UE. The L2 layer 305 comprises an MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearers and logical channels. The PDCP sub-layer 304 also provides security by encrypting data packets, and provides inter-cell mobility support of the first communication node device between the second communication node devices. The RLC sub-layer 303 provides segmentation and reassembly of upper-layer data packets, retransmission of lost data packets, and reordering of data packets to compensate for out-of-order reception due to an HARQ. The MAC sub-layer 302 provides multiplexing between logical and transport channels. The MAC sub-layer 302 is also responsible for allocating various radio resources (e.g., resource blocks) in one cell between the first communication node devices. The MAC sub-layer 302 is also responsible for HARQ operations. An RRC (Radio Resource Control) sub-layer 306 in a Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sub-layers in the control plane 300 for a physical layer 351, a PDCP sub-layer 354 in an L2 layer 355, an RLC sub-layer 353 in the L2 layer 355, and an MAC sub-layer 352 in the L2 layer 355, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS flow and a data radio bearer (DRB) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server).

As one embodiment, the radio protocol architecture in FIG. 3 is applicable to the first node in the present application.

As one embodiment, the radio protocol architecture in FIG. 3 is applicable to the second node in the present application.

As one embodiment, the first information block is generated in the RRC sub-layer 306.

As one embodiment, the first information block is generated in the MAC sub-layer 302 or the MAC sub-layer 352.

As one embodiment, the first information block is generated at the PHY301 or PHY351.

As one embodiment, the first signal is generated in the PHY301 or the PHY351.

As one embodiment, the first signal is generated in the MAC sub-layer 302 or the MAC sub-layer 352.

As one embodiment, the higher layer in the present application refers to a layer above a physical layer.

### Embodiment 4

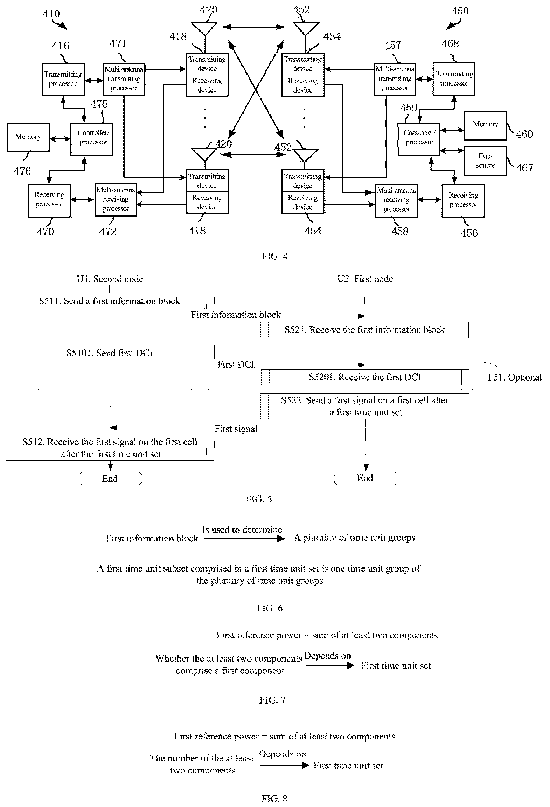

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a sub-carrier, multiplexes the modulated symbols with a reference signal (e.g., pilot) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from a time domain to a frequency domain after the receiving analog precoding/beamforming operation. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a DL, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In transmission from the second communication device 450 to the first communication device 410, at the second communication device 450, the data source 467 is used to provide upper-layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transport channels based on radio resource allocation of the first communication device 410, and implements the functions of the L2 layer for the user plane and the control plane. The controller/processor 459 is also responsible for HARQ operations, retransmission of lost packets, and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 will modulate a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transport and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for using an ACK and/or NACK protocol to perform error detection to support the HARQ operations.

As one embodiment, the second communication device 450 comprises: at least one processor and at least one memory, the at least one memory comprising a computer program code; the at least one memory and the computer program code are configured to be used together with the at least one processor. The second communication device 450 apparatus at least receives the first information block; and sends the first signal on the first cell after the first time unit set. The first information block is used to determine the first time unit set; and transmit power of the first signal is the smallest value between a first reference power and a first power threshold, the first reference power depends on the first time unit set, and the second communication device 450 does not send at least a PUSCH on the first cell in the first time unit set.

As one embodiment, the second communication device 450 comprises: a memory storing a computer-readable instruction program, wherein the computer-readable instruction program generates actions when executed by at least one processor, and the actions comprise: receiving the first information block; and sends the first signal on the first cell after the first time unit set.

As one embodiment, the first communication device 410 comprises: at least one processor and at least one memory, the at least one memory comprising computer program codes; and the at least one memory and the computer program code are configured to be used together with the at least one processor. The first communication device 410 apparatus at least sends the first information block; and receives the first signal on the first cell after the first time unit set. The first information block is used to determine the first time unit set; and transmit power of the first signal is the smallest value between a first reference power and a first power threshold, the first reference power depends on the first time unit set, and a sender of the first signal does not send at least a PUSCH on the first cell in the first time unit set.

As one embodiment, the first communication device 410 comprises: a memory storing a computer-readable instruction program, wherein the computer-readable instruction program generates actions when executed by at least one processor, and the actions comprise: sending the first information block; and receives the first signal on the first cell after the first time unit set.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used to receive the first information block; and at least one of {the antenna 420, the transmitting device 418, the transmitting processor 416, the multi-antenna transmitting processor 471, the controller/processor 475, and the memory 476} is used to send the first information block.

As one embodiment, at least one of {the antenna 420, the receiving device 418, the receiving processor 470, the multi-antenna receiving processor 472, the controller/processor 475, and the memory 476} is used to receive the first signal on the first cell after the first time unit set; and at least one of {the antenna 452, the transmitting device 454, the transmitting processor 468, the multi-antenna transmitting processor 457, the controller/processor 459, the memory 460, and the data source 467} is used to send the first signal on the first cell after the first time unit set.

As one embodiment, at least one of {the antenna 452, the receiving device 454, the receiving processor 456, the multi-antenna receiving processor 458, the controller/processor 459, the memory 460, and the data source 467} is used to receive the first DCI; and at least one of {the antenna 420, the transmitting device 418, the transmitting processor 416, the multi-antenna transmitting processor 471, the controller/processor 475, and the memory 476} is used to send the first DCI.

### Embodiment 5

FIG. 5 illustrates a flowchart of transmission according to one embodiment of the present application, as shown in FIG. 5. In the FIG. 5, a second node U1 and a first node U2 are communication nodes transmitted via an air interface. In FIG. 5, steps in block F51 are optional.

For the second node U1, a first information block is sent in step S511; first DCI is sent in step S5101; and a first signal is received on a first cell after a first time unit set in step S512.

For the first node U2, the first information block is received in step S521; the first DCI is received in step S5201; and the first signal is sent on the first cell after the first time unit set in step S522.

In Embodiment 5, the first information block is used by the first node U2 for determining the first time unit set; and transmit power of the first signal is the smallest value between a first reference power and a first power threshold, the first reference power depends on the first time unit set, and the first node does not send at least a PUSCH on the first cell in the first time unit set.

As one embodiment, the first node U2 is the first node in the present application.

As one embodiment, the second node U1 is the second node in the present application.

As one embodiment, an air interface between the second node U1 and the first node U2 comprises a wireless interface between a base station device and user equipment.

As one embodiment, the air interface between the second node U1 and the first node U2 comprises a wireless interface between a relay node device and user equipment.

As one embodiment, the air interface between the second node U1 and the first node U2 comprises a wireless interface between user equipment and user equipment.

As one embodiment, the second node U1 is a serving cell maintenance base station of the first node U2.

As one embodiment, the second node is a maintenance base station of the first cell.

As one embodiment, the second node turns off uplink reception in the first time unit set.

As one embodiment, the second node does not receive or process an uplink signal in the first time unit set.

As one embodiment, the second node does not receive or process a PUSCH in the first time unit set.

As one embodiment, the second node does not receive or process a PUSCH and a PUCCH in the first time unit set.

As one embodiment, the second node does not receive or process a PUSCH, a PUCCH, and an SRS in the first time unit set.

As one embodiment, the second node does not receive or process a periodic and semi-persistent SRS in the first time unit set.

As one embodiment, the second node does not receive or process CSI reports in the first time unit set.

As one embodiment, the second node does not receive or process periodic and semi-persistent CSI reports in the first time unit set.

As one embodiment, the second node turns off uplink reception in the first time unit subset.

As one embodiment, the second node does not receive or process an uplink signal in the first time unit subset.

As one embodiment, the second node does not receive or process a PUSCH in the first time unit subset.

As one embodiment, the second node does not receive or process a PUSCH and a PUCCH in the first time unit subset.

As one embodiment, the second node does not receive or process a PUSCH, a PUCCH, and an SRS in the first time unit subset.

As one embodiment, the second node does not receive or process a periodic and semi-persistent SRS in the first time unit subset.

As one embodiment, the second node does not receive or process CSI reports in the first time unit subset.

As one embodiment, the second node does not receive or process periodic and semi-persistent CSI reports in the first time unit subset.

As one embodiment, the second node maintains uplink reception during the active time of the cell DRX.

As one embodiment, the second node turns off uplink reception during the inactive time of the cell DRX.

As one embodiment, the second node does not receive or process an uplink signal during the inactive time of the cell DRX.

As one embodiment, the second node enters an energy-saving mode during the inactive time of the cell DRX.

As one embodiment, the second node maintains downlink sending during the active time of the cell DTX.

As one embodiment, the second node turns off downlink sending during the inactive time of the cell DTX.

As one embodiment, the second node enters an energy-saving mode during the inactive time of the cell DTX.

As one embodiment, the second node maintains uplink reception in at least one time unit set that does not belong to the first time unit subset in the first time unit set.

As one embodiment, the first information block is transmitted on a PDSCH.

As one embodiment, the first information block is transmitted on a PDCCH.

As one embodiment, the first signal is transmitted on a PUSCH.

As one embodiment, the first signal is transmitted on a PUCCH.

As one embodiment, the steps in block F51 in FIG. 5 exist; the first DCI is used by the first node U2 for determining a time domain resource occupied by the first signal; and the first DCI comprises a first field, and whether the first reference power depends on the first field in the first DCI is related to the first time unit set.

As one embodiment, the first DCI is transmitted on a PDCCH.

### Embodiment 6

Embodiment 6 illustrates a schematic diagram of a first information block being used to determine a first time unit set according to one embodiment of the present application, as shown in FIG. 6. In Embodiment 6, the first information block is used to determine a plurality of time unit groups, and each time unit group of the plurality of time unit groups comprises at least one time unit; and the first time unit set comprises a first time unit subset, and the first time unit subset is one time unit group of the plurality of time unit groups.

As one embodiment, the number of time units comprised in any two time unit groups in the plurality of the time unit groups is equal.

As one embodiment, each time unit group of the plurality of time unit groups comprises only one time unit.

As one embodiment, each time unit group of the plurality of time unit groups comprises a plurality of time units.

As one embodiment, each time unit group of the plurality of time unit groups comprises a plurality of consecutive time units.

As one embodiment, each time unit group of the plurality of time unit groups is composed of a plurality of consecutive time units.

As one embodiment, each time unit group of the plurality of time unit groups occupies consecutive time domain resources.

As one embodiment, any two adjacent time unit groups among the plurality of time unit groups are discontinuous in a time domain.

As one embodiment, the plurality of time unit groups are mutually orthogonal pair-wise in a time domain.

As one embodiment, the plurality of time unit groups are periodic in a time domain.

As one embodiment, the plurality of time unit groups are equally spaced in a time domain.

As one embodiment, the first time unit set is the first time unit subset.

As one embodiment, the first time unit set comprises at least one time unit that does not belong to the first time unit subset.

As one embodiment, the first time unit subset is the latest time unit group among the plurality of time unit groups that is earlier than the first signal.

As one embodiment, the first information block indicates a first length and a first period, and the first length and the first period are used to determine the plurality time unit groups; and the first length and the first period are respectively positive real numbers.

As one embodiment, the plurality of time unit groups are periodic in a time domain with the first period as the period.

As one embodiment, a period in which the plurality of time unit groups appear in a time domain is equal to the first period.

As one embodiment, a time interval between any two adjacent time unit groups among the plurality of time unit groups is equal to the first period.

As one embodiment, a time interval between start times of any two adjacent time unit groups among the plurality of time unit groups is equal to the first period.

As one embodiment, two adjacent time unit groups among the plurality of time unit groups means that no time unit group among the plurality of time unit groups is located between the two adjacent time unit groups in a time domain.

As one embodiment, a length of each time unit group among the plurality of time unit groups is equal to the first length.

As one embodiment, a length of each time unit group among the plurality of time unit groups is equal to the first period minus the first length.

As one embodiment, a length of one time unit group refers to: a length of a time domain resource occupied by the one time unit group.

As one embodiment, a length of one time unit group refers to: the number of the time units comprised in the one time unit group.

As one embodiment, the first length is measured in milliseconds (ms).

As one embodiment, the first length is measured in the number of symbols.

As one embodiment, the first length is measured in the number of slots.

As one embodiment, the first length is measured in the number of subframes.

As one embodiment, the first period is measured in milliseconds (ms).

As one embodiment, the first period is measured in the number of symbols.

As one embodiment, the first period is measured in the number of slots.

As one embodiment, the first period is measured in the number of subframes.

As one embodiment, the plurality of time unit groups comprise an inactive time of a cell DRX.

As one embodiment, each time unit group of the plurality of time unit groups comprises a partial inactive time of a cell DRX.

As one embodiment, each time unit group of the plurality of time unit groups is an inactive time within one period of a cell DRX.

As one embodiment, the plurality of time unit groups belongs to an inactive time of a cell DRX.

As one embodiment, the first node does not perform uplink transmission on the first cell in the plurality of time unit groups.

As one embodiment, the first node turns off uplink transmission on the first cell in the plurality of time unit groups.

As one embodiment, the first node does not send a PUSCH on the first cell in the plurality of time unit groups.

As one embodiment, the first node considers that a signal sent on the first cell in the plurality of time unit groups will not be received or processed.

As one embodiment, the first node considers that a PUSCH sent on the first cell in the plurality of time unit groups will not be received or processed.

As one embodiment, the first cell turns off uplink reception in the plurality of time unit groups.

As one embodiment, the first cell does not receive or process a PUSCH in the plurality of time unit groups.

As one embodiment, the second node turns off uplink reception in the plurality of time unit groups.

As one embodiment, the second node does not receive or process a PUSCH in the plurality of time unit groups.

As one embodiment, the first information block is used to determine a second time unit group pool, wherein the second time unit group pool and the plurality of time unit groups are orthogonal in a time domain, and the second time unit group pool comprises a positive integer number of time unit groups greater than 1.

As one embodiment, the plurality of time unit groups comprise time units that do not belong to the second time unit group pool.

As one embodiment, the plurality of time unit groups are composed of time units that do not belong to the second time unit group pool.

As one embodiment, the first information block indicates the plurality of time unit groups by indicating the second time unit group pool.

As one embodiment, one time unit group in the second time unit group pool comprises only one time unit.

As one embodiment, one time unit group in the second time unit group pool comprises a plurality of time units.

As one embodiment, any two adjacent time unit groups in the second time unit group pool are discontinuous in a time domain.

As one embodiment, time unit groups in the second time unit group pool are periodic in a time domain.

As one embodiment, time unit groups in the second time unit group pool are equally spaced in a time domain.

As one embodiment, the first information block indicates the second time unit group pool.

As one embodiment, the first information block indicates a first length and a first period, and the first length and the first period are used to determine the second time unit group pool; and the first length and the first period are respectively positive real numbers.

As one embodiment, time unit groups in the second time unit group pool are periodic in a time domain with the first period as the period.

As one embodiment, a period in which time unit groups in the second time unit group pool appear in a time domain is equal to the first period.

As one embodiment, a time interval between start times of any two adjacent time unit groups in the second time unit group pool is equal to the first period.

As one embodiment, two adjacent time unit groups in the second time unit group pool means that no time unit group in the second time unit group pool is located between the two adjacent time unit groups in a time domain.

As one embodiment, a length of each time unit group in the second time unit group pool is equal to the first length.

As one embodiment, a length of each time unit group in the second time unit group pool is equal to the first period minus the first length.

As one embodiment, the second time unit group pool comprises an active time of a cell DRX.

As one embodiment, each time unit group of the second time unit group pool comprises a partial active time of a cell DRX.

As one embodiment, each time unit group of the second time unit group pool is an active time within one period of a cell DRX.

As one embodiment, the second time unit group pool belongs an active time of a cell DRX.

As one embodiment, the first time unit subset is an inactive time within one period of a cell DRX.

As one embodiment, any time unit in the first time unit set that does not belong to the first time unit subset does not comprise an inactive time of a cell DRX.

### Embodiment 7

Embodiment 7 illustrates a schematic diagram of a first reference power depending on a first time unit set according to one embodiment of the present application, as shown in FIG. 7. In Embodiment 7, the first reference power is equal to the sum of at least two components, and whether the at least two components comprise a first component depends on the first time unit set.

As one embodiment, whether the at least two components comprise the first component depends on a length of the first time unit set.

As one embodiment, whether the at least two components comprise the first component depends on whether the first node performs uplink transmission on the first cell between the first signal and the first time unit set.

As one embodiment, whether the at least two components comprise the first component depends on whether the first node sends a PUSCH on the first cell between the first signal and the first time unit set.

As one embodiment, whether the at least two components comprise the first component depends on whether the first signal occupies a first uplink symbol after the first time unit set.

As one embodiment, whether the at least two components comprise the first component depends on whether the first signal occupies a first uplink slot after the first time unit set.

As one embodiment, whether the at least two components comprise the first component depends on whether the first signal occupies a first symbol after the first time unit set that is configured as UL by *tdd-UL-DL-ConfigurationCommon* or *tdd-UL-DL-ConfigurationDedicated.*

As one embodiment, whether the at least two components include the first component depends on depending on whether the first signal occupies a first symbol after the first time unit set that is configured as UL by *tdd-UL-DL-ConfigurationCommon* or *tdd-UL-DL-ConfigurationDedicated* or a first symbol that is configured as flexible by *tdd-UL-DL-Configuration Common* or *tdd-UL-DL-ConfigurationDedicated* and in which the first node is indicated or scheduled to perform uplink transmission.

As one embodiment, the number of components comprised in the at least two components is equal to 2.

As one embodiment, the number of components comprised in the at least two components is equal to 3.

As one embodiment, the number of components comprised in the at least two components is equal to 4.

As one embodiment, the number of components comprised in the at least two components is equal to 5.

As one embodiment, the number of components comprised in the at least two components is equal to 6.

As one embodiment, the first component is a power control adjustment state.

As one embodiment, the first component is a power control adjustment state based on TPC (Transmit Power Control).

As one embodiment, the first component is used for closed-loop power control.

As one embodiment, the first component is one of *f_{b,f,c}*(*i, l*), *g_{b,f,c}*(*i, l*), or *h_{b,f,c}*(*i, l*).

As one embodiment, the first component is *f_{b,f,c}*(*i, l*), and the first signal is transported on a PUSCH.

As one embodiment, the first component is *g_{b,f,c}*(*i, l*), and the first signal is transported on a PUCCH.

As one embodiment, the first component is *h_{b,f,c}*(*i, l*), and the first signal is an SRS.

As one embodiment, the definitions of *f_{b,f,c}*(*i, l*), *g_{b,f,c}*(*i, l*), and *h_{b,f,c}*(*i, l*) refer to 3GPP TS38.213.

As one embodiment, the first signal is transported using a power control adjustment state index *l* in a transmission occasion *i* in an active uplink BWP *b* of a carrier *f* of the cell *c.*

As one embodiment, the first component is related to the bandwidth allocated to the first signal, which is represented as number of RBs (Resource Blocks).

As one embodiment, the RB refers to a PRB (Physical Resource Block).

As one embodiment, the RB comprises a PRB.

As one embodiment, the first component is related to one pathloss.

As one embodiment, the first component is related to the number of REs (Resource Elements) occupied by the first signal.

As one embodiment, the first component is related to an MCS of the first signal.

As one embodiment, when the length of the first time unit set is greater than a first threshold, the at least two components do not comprise the first component.

As one embodiment, when the length of the first time unit set is greater than or equal to the first threshold, the at least two components do not comprise the first component.

As one embodiment, a characteristic of the above method comprises: after the first node does not send a PUSCH in a time unit set whose length is greater than or not less than the first threshold, power control of the first signal does not comprise closed-loop power control.

As one embodiment, the benefits of the above method comprise: avoiding the negative impact of inaccurate closed-loop power control, improving the reliability of uplink transmission, and reducing interference.

As one embodiment, when the length of the first time unit set is less than the first threshold, the at least two components comprise the first component.

As one embodiment, when the length of the first time unit set is less than or equal to the first threshold, the at least two components comprise the first component.

As one embodiment, the first threshold is one non-negative real number.

As one embodiment, the first threshold is one non-negative integer.

As one embodiment, the first threshold is configurable.

As one embodiment, the first threshold is configured by RRC signaling.

As one embodiment, the first threshold is configured by an MAC CE.

As one embodiment, the first threshold is fixed.

As one embodiment, the first threshold does not need to be configured.

As one embodiment, when the first node does not perform uplink transmission on the first cell between the first signal and the first time unit set, the at least two components do not comprise the first component.

As one embodiment, when the first node does not send a PUSCH on the first cell between the first signal and the first time unit set, the at least two components do not comprise the first component.

As one embodiment, a characteristic of the above method comprises: when the first node does not perform uplink transmission or does not send a PUSCH on the first cell between the first signal and the first time unit set, power control of the first signal does not comprise closed-loop power control; and the benefits of the above method comprise: avoiding the negative impact of inaccurate closed-loop power control, improving the reliability of uplink transmission, and reducing interference.

As one embodiment, when the first node performs uplink transmission on the first cell between the first signal and the first time unit set, the at least two components comprise the first component.

As one embodiment, when the first node sends a PUSCH on the first cell between the first signal and the first time unit set, the at least two components comprise the first component.

As one embodiment, the phrase "sending a PUSCH" refers to: performing PUSCH transmission.

As one embodiment, the phrase "sending a PUSCH" refers to: sending a signal in the PUSCH.

As one embodiment, the phrase "sending a PUSCH" refers to: sending a signal whose occupied a physical channel is the PUSCH.

As one embodiment, when the first signal occupies the first uplink symbol after the first time unit set, the at least two components do not comprise the first component.

As one embodiment, when the first signal does not occupy the first uplink symbol after the first time unit set, the at least two components comprise the first component.

As one embodiment, when the first signal occupies the first uplink slot after the first time unit set, the at least two components do not comprise the first component.

As one embodiment, when the first signal does not occupy the first uplink slot after the first time unit set, the at least two components comprise the first component.

As one embodiment, the uplink symbol/uplink slot comprises: a symbol/slot configured as UL by *tdd-UL-DL-ConfigurationCommon* or *tdd-UL-DL-ConfigurationDedicated.*

As one embodiment, the uplink symbol/uplink slot comprises: a symbol configured as UL by *tdd-UL-DL-ConfigurationCommon* or *ConfigurationDedicated,* and a symbol/slot configured as flexible by *tdd-UL-DL-ConfigurationCommon* or *tdd-UL-DL-ConfigurationDedicated* and in which the first node is indicated or scheduled to perform uplink transmission.

As one embodiment, the uplink symbol/uplink slot refers to: a symbol/slot configured as UL by *tdd-UL-DL-ConfigurationCommon* or *tdd-UL-DL-ConfigurationDedicated.*

As one embodiment, the uplink symbol/uplink slot refers to: a symbol configured as UL by *tdd-UL-DL-ConfigurationCommon* or *ConfigurationDedicated,* and a symbol/slot configured as flexible by *tdd-UL-DL-ConfigurationCommon* or *tdd-UL-DL-ConfigurationDedicated* and in which the first node is indicated or scheduled to perform uplink transmission.

As one embodiment, when the length of the first time unit set is greater than the first threshold and the first node does not perform uplink transmission on the first cell between the first signal and the first time unit set, the at least two components do not comprise the first component.

As one embodiment, when the length of the first time unit set is less than the first threshold, or the first node performs uplink transmission on the first cell between the first signal and the first time unit set, the at least two components comprise the first component.

As one embodiment, when the length of the first time unit set is greater than the first threshold and the first node does not send a PUSCH on the first cell between the first signal and the first time unit set, the at least two components do not comprise the first component.

As one embodiment, when the length of the first time unit set is less than the first threshold, or the first node sends a PUSCH on the first cell between the first signal and the first time unit set, the at least two components comprise the first component.

As one embodiment, before a power control adjustment state is reset, the at least two components do not comprise the first component.

As one embodiment, after a power control adjustment state is reset, the at least two components comprise the first component.

As one embodiment, before a higher layer provides the configuration of P0 or alpha, the at least two components do not comprise the first component.

As one embodiment, before a higher layer provides the reconfiguration of P0 or alpha, the at least two components do not comprise the first component.

As one embodiment, after a higher layer provides the configuration of P0 or alpha, the at least two components comprise the first component.

As one embodiment, after a higher layer provides the reconfiguration of P0 or alpha, the at least two components comprise the first component.

As one embodiment, the P0 refers to one of *P*_{*o*_*UE*_*PUSCH,b,f,c*}(*j*), *P*_{*o*_*UE*_*PUCCH*}(*qᵤ*), or *P_{o_{SRS},b,f,c}*(*qₛ*).

As one embodiment, the definitions of *P*_{*o*_*UE*_*PUSCH,b,f,c*}(*j*), *P*_{*o*_*UE*_*PUCCH*}(*qᵤ*), and *P_{o_{SRS},b,f,c}*(*qₛ*) refer to 3GPP TS38.213.

As one embodiment, the P0 refers to *P*_{*o*_*UE*_*PUSCH,b,f,c*}(*j*).

As one embodiment, the alpha refers to: *α_{b,f,c}*(*j*), or *α_{SRS,b,f,c}*(*qₛ*).

As one embodiment, the definitions of *α_{b,f,c}*(*j*)(*qᵤ*), and *α_{SRS,b,f,c}*(*qₛ*)) refer to 3GPP TS38.213.

As one embodiment, the alpha refers to: *α_{b,f,c}*(*j*).

As one embodiment, the sentence "before/after the power control adjustment state is reset" refers to: before/after the power control adjustment state is reset after the first time unit set.

As one embodiment, the sentence "before/after a higher layer provides the configuration of P0 or alpha" refers to: before/after a higher layer provides the configuration of P0 or alpha after the first time unit set.

As one embodiment, the sentence "before/after a higher layer provides the reconfiguration of P0 or alpha" refers to: before/after a higher layer provides the reconfiguration of P0 or alpha after the first time unit set.

### Embodiment 8

Embodiment 8 illustrates a schematic diagram of a first reference power depending on a first time unit set according to one embodiment of the present application, as shown in FIG. 8. In Embodiment 8, the first reference power is equal to the sum of at least two components, and the number of the at least two components depends on the first time unit set.

As one embodiment, the number of the at least two components refers to: the number of components comprised in the at least two components.

As one embodiment, when the length of the first time unit set is greater than a first threshold, the at least two components are composed of a first integer number of components.

As one embodiment, when the length of the first time unit set is not greater than the first threshold, the at least two components are composed of a second integer number of components.

As one embodiment, when the length of the first time unit set is not less than a first threshold, the at least two components are composed of a first integer number of components.

As one embodiment, when the length of the first time unit set is less than the first threshold, the at least two components are composed of a second integer number of components.

As one embodiment, when the first node does not perform uplink transmission on the first cell between the first signal and the first time unit set, the at least two components are composed of a first integer number of components.

As one embodiment, when the first node performs uplink transmission on the first cell between the first signal and the first time unit set, the at least two components are composed of a second integer number of components.

As one embodiment, when the first node does not send a PUSCH on the first cell between the first signal and the first time unit set, the at least two components are composed of a first integer number of components.

As one embodiment, when the first node sends a PUSCH on the first cell between the first signal and the first time unit set, the at least two components are composed of a second integer number of components.

As one embodiment, when the first signal occupies the first uplink symbol after the first time unit set, the at least two components are composed of a first integer number of components.

As one embodiment, when the first signal does not occupy the first uplink symbol after the first time unit set, the at least two components are composed of a second integer number of components.

As one embodiment, when the first signal occupies the first uplink slot after the first time unit set, the at least two components are composed of a first integer number of components.

As one embodiment, when the first signal does not occupy the first uplink slot after the first time unit set, the at least two components are composed of a second integer number of components.

As one embodiment, before a power control adjustment state is reset, the at least two components are composed of a first integer number of components.

As one embodiment, after a power control adjustment state is reset, the at least two components are composed of a second integer number of components.

As one embodiment, before a higher layer provides the configuration of P0 or alpha, the at least two components are composed of a first integer number of components.

As one embodiment, before a higher layer provides the reconfiguration of P0 or alpha, the at least two components are composed of a first integer number of components.

As one embodiment, after a higher layer provides the configuration of P0 or alpha, the at least two components are composed of a second integer number of components.

As one embodiment, after a higher layer provides the reconfiguration of P0 or alpha, the at least two components are composed of a second integer number of components.

As one embodiment, the first integer and the second integer are respectively positive integers, and the first integer is not equal to the second integer.

As one embodiment, the first integer is equal to 2, and the second integer is equal to 6.

As one embodiment, the first integer is equal to 2, and the second integer is equal to 5.

As one embodiment, the first integer is equal to 6, and the second integer is equal to 5.

As one embodiment, a characteristic of the above method comprises: after the first node does not send a PUSCH in a time unit set whose length is greater than or not less than the first threshold, or when the first node does not perform uplink transmission or does not send a PUSCH on the first cell between the first signal and the first time unit set, the first signal adopts the power control mechanism of a PRACH or a PUCCH; and the above method improves the robustness of uplink transmission and reduces interference.

As one embodiment, the first integer is equal to 2, and the first integer number of components are respectively a second component and a third component, wherein the second component is a pathloss in dB, and the third component is a target received power.

As one sub-embodiment of the above embodiment, the third component is a PRACH target received power provided by the higher layer.

As one embodiment, the second integer is equal to 5, and the second integer number of components are respectively a first component, a second component, a third component, a fourth component, and a fifth component, wherein the first component is a power control adjustment state, the second component is related to one pathloss, the third component is P0, the fourth component is related to the bandwidth allocated to the first signal, which is represented as the number of RBs, and the fifth component is related to at least one of the number of symbols or the number of REs occupied by the first signal.

As one sub-embodiment of the above embodiment, the third component is *P*_{0_*PUSCH,b,f,c*}(*j*)*.*

As one sub-embodiment of the above embodiment, the second component is equal to the product of a pathloss in dB and a non-negative real number not greater than 1.

As one sub-embodiment of the above embodiment, the fifth component is related to an MCS of the first signal.

As one sub-embodiment of the above embodiment, the fifth component is related to a size of each code block in a TB (Transport Block) carried by the first signal.

As one embodiment, the first integer is equal to 6, and the first integer number of components are respectively a first component, a second component, a third component, a fourth component, a fifth component, and a sixth component, wherein the first component is a power control adjustment state, the second component is related to one pathloss, the third component is P0, the fourth component is related to the bandwidth allocated to the first signal, which is represented as the number of RBs, the fifth component is related to at least one of the number of symbols or the number of REs occupied by the first signal, and the sixth component is related to a format of the PUCCH that bears the first signal.

As one sub-embodiment of the above embodiment, the third component is *P*_{0_*PUCCH,b,f,c*}(*qᵤ*).

As one sub-embodiment of the above embodiment, the second component is a pathloss in dB.

As one sub-embodiment of the above embodiment, the fifth component is related to the number of bits of UCI (Uplink Control Information) carried by the first signal.

### Embodiment 9

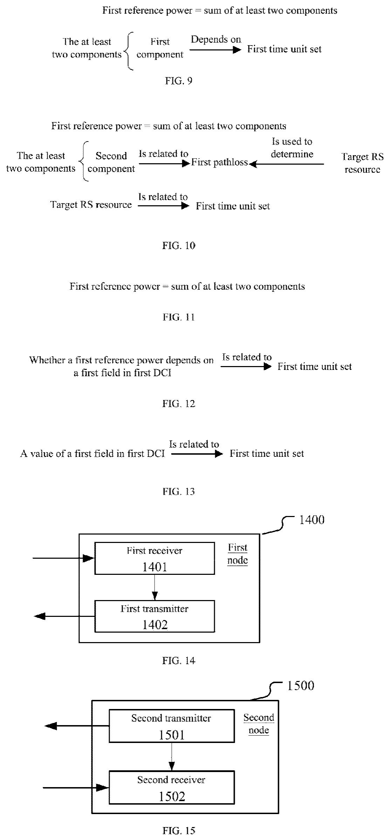

Embodiment 9 illustrates a schematic diagram of a first reference power depending on a first time unit set according to one embodiment of the present application, as shown in FIG. 9. In Embodiment 9, the first reference power is equal to the sum of at least two components, the at least two components comprise a first component, and the first component depends on the first time unit set.

As one embodiment, the first component depends on a length of the first time unit set.

As one embodiment, the first component depends on whether the first node performs uplink transmission on the first cell between the first signal and the first time unit set.

As one embodiment, the first component depends on whether the first node sends a PUSCH on the first cell between the first signal and the first time unit set.

As one embodiment, the first component depends on whether the first signal occupies a first uplink symbol after the first time unit set.

As one embodiment, the first component depends on whether the first signal occupies a first uplink slot after the first time unit set.

As one embodiment, the first component is a power control adjustment state.

As one embodiment, the first component is used for closed-loop power control.

As one embodiment, a value of the first component depends on the first time unit set.

As one embodiment, when the length of the first time unit set is greater than a first threshold, the first component is reset.

As one embodiment, when the length of the first time unit set is greater than or equal to a first threshold, the first component is reset.

As one embodiment, a characteristic of the above method comprises: after the first node does not send a PUSCH in a time unit set whose length is greater than or not less than the first threshold, the power control adjustment state/closed-loop power control/TPC accumulation of the first signal is reset; and the benefits of the above method comprise: avoiding the negative impact of inaccurate TPC, improving the reliability of uplink transmission, and reducing interference.

As one embodiment, when the length of the first time unit set is greater than a first threshold, the first component is reset to 0.

As one embodiment, when the length of the first time unit set is greater than or equal to a first threshold, the first component is reset to 0.

As one embodiment, when the length of the first time unit set is greater than a first threshold, the value of the first component is fixed.

As one embodiment, when the length of the first time unit set is greater than or equal to a first threshold, the value of the first component is fixed mutable.

As one embodiment, when the length of the first time unit set is greater than a first threshold, the first component is fixed at 0.

As one embodiment, when the length of the first time unit set is greater than or equal to a first threshold, the first component is fixed at 0.

As one embodiment, when the length of the first time unit set is greater than a first threshold, the value of the first component is non-configurable.

As one embodiment, when the length of the first time unit set is greater than or equal to a first threshold, the value of the first component is non-configurable.

As one embodiment, when the length of the first time unit set is less than a first threshold, the value of the first component is configurable.

As one embodiment, when the length of the first time unit set is less than or equal to a first threshold, the value of the first component is configurable.

As one embodiment, when the length of the first time unit set is greater than a first threshold, the value of the first component is immutable.

As one embodiment, when the length of the first time unit set is greater than or equal to a first threshold, the value of the first component is immutable.

As one embodiment, when the length of the first time unit set is less than a first threshold, the value of the first component is mutable.

As one embodiment, when the length of the first time unit set is less than or equal to a first threshold, the value of the first component is mutable.

As one embodiment, when the length of the first time unit set is greater than a first threshold, the first component does not depend on the sum of a plurality of TPC (Transmit Power Control) command values.

As one embodiment, when the length of the first time unit set is greater than or equal to a first threshold, the first component does not depend on the sum of a plurality of TPC commands values.

As one embodiment, when the length of the first time unit set is less than a first threshold, the first component depends on the sum of a plurality of TPC command values.

As one embodiment, when the length of the first time unit set is less than or equal to a first threshold, the first component depends on the sum of a plurality of TPC commands values.

As one embodiment, the plurality of TPC commands are earlier than the first signal.

As one embodiment, the plurality of TPC commands comprise a TPC command indicated by first DCI, and the first DCI is used to determine a time domain resource occupied by the first signal.

As an example, the phrase "does not depend on/depends on the sum of a plurality of TPC command values" means that it does not depend on/depends on the sum of the accumulated *δ_{PUSCH,b,f,c}*, *δ_{SRS,b,f,c}*, or *δ_{OUCCH,b,f,c}* indicated by the plurality of TPC commands.

As an example, the phrase "does not depend on/depends on the sum of a plurality of TPC command values" means that it does not depend on/depends on the accumulation of the plurality of TPC commands.

As one embodiment, when the first time unit set

As one embodiment, when the length of the first time unit set is greater than a first threshold, the first component depends on a first parameter, and the first parameter is provided by a higher layer.

As one embodiment, when the length of the first time unit set is greater than or equal to a first threshold, the first component depends on a first parameter, and the first parameter is provided by a higher layer.

As one embodiment, when the length of the first time unit set is less than a first threshold, the first component does not depend on a first parameter, and the first parameter is provided by a higher layer.

As one embodiment, when the length of the first time unit set is less than or equal to a first threshold, the first component does not depend on a first parameter, and the first parameter is provided by a higher layer.

As one embodiment, the first parameter corresponds to ramp-up total power of a higher layer request.

As one embodiment, the first parameter corresponds to ramp-up total power of a higher layer request from the first to last random access preamble.

As one embodiment, the first parameter is Δ*P*_{*rampup*_}*_{requested,b,f,c}.*

As one embodiment, a characteristic of the above method comprises: after the first node does not send a PUSCH in a time unit set whose length is greater than or not less than the first threshold, the first signal adopts the power control adjustment state of a PUSCH scheduled by RAR (Random-Access Response) or a PUSCH of the Type 2 random-access process; and the above method avoids the negative impact brought by inaccurate TPC, improves the reliability of uplink transmission, and reduces interference.

As one embodiment, the first component depends on the first parameter means that: the first component is equal to the smallest value between the second parameter and the first parameter, the second parameter is equal to the greatest value between 0 and a third parameter, and the third parameter is equal to the first power threshold minus the sum of the second component, the third component, the fourth component, and the fifth component.

As one embodiment, the first component depends on the first parameter means that: the first component is equal to the sum of a fourth parameter and the smallest value between the second parameter and the first parameter, the second parameter is equal to the greatest value between 0 and a third parameter, and the third parameter is equal to the first power threshold minus the sum of the second component, the third component, the fourth component, the fifth component, and the fourth parameter; and The fourth parameter is a TPC command value indicated by a random access response grant in a rand access response message.

As one embodiment, the second component is related to one pathloss.

As one embodiment, the third component is a target received power.

As one embodiment, the third component is P0 for uplink power control.

As one embodiment, the third component is *P*_{0_*PUSCH,b,f,c*}(0).

As one embodiment, the fourth component is related to the bandwidth allocated to the first signal, which is represented as number of RBs.

As one embodiment, the fifth component is a power adjustment component.

As one embodiment, the fifth component is related to at least one of the number of REs or the number of symbols occupied by the first signal.

As one embodiment, when the first node does not perform uplink transmission on the first cell between the first signal and the first time unit set, the first component is reset.

As one embodiment, when the first node does not perform uplink transmission on the first cell between the first signal and the first time unit set, the first component is reset to 0.

As one embodiment, when the first node does not send a PUSCH on the first cell between the first signal and the first time unit set, the first component is reset.

As one embodiment, when the first node does not send a PUSCH on the first cell between the first signal and the first time unit set, the first component is reset to 0.

As one embodiment, a characteristic of the above method comprises: when the first node does not perform uplink transmission or does not send a PUSCH on the first cell between the first signal and the first time unit set, the power control adjustment state/closed-loop power control/TPC accumulation of the first signal is reset; and the above method avoids the negative impact of inaccurate TPC, improves the reliability of uplink transmission, and reduces interference.

As one embodiment, when the first node does not perform uplink transmission on the first cell between the first signal and the first time unit set, the value of the first component is fixed.

As one embodiment, when the first node does not send a PUSCH on the first cell between the first signal and the first time unit set, the value of the first component is fixed.

As one embodiment, when the first node does not perform uplink transmission on the first cell between the first signal and the first time unit set, the first component is fixed at 0.

As one embodiment, when the first node does not send a PUSCH on the first cell between the first signal and the first time unit set, the first component is fixed at 0.

As one embodiment, when the first node does not perform uplink transmission on the first cell between the first signal and the first time unit set, the value of the first component is non-configurable.

As one embodiment, when the first node does not send a PUSCH on the first cell between the first signal and the first time unit set, the value of the first component is non-configurable.

As one embodiment, when the first node does not perform uplink transmission on the first cell between the first signal and the first time unit set, the value of the first component is immutable.

As one embodiment, when the first node does not send a PUSCH on the first cell between the first signal and the first time unit set, the value of the first component is immutable.

As one embodiment, when the first node does not perform uplink transmission on the first cell between the first signal and the first time unit set, the first component does not depend on the sum of the plurality of TPC command values.

As one embodiment, when the first node does not send a PUSCH on the first cell between the first signal and the first time unit set, the first component does not depend on the sum of the plurality of TPC command values.

As one embodiment, when the first node does not perform uplink transmission on the first cell between the first signal and the first time unit set, the first component depends on a first parameter, and the first parameter is provided by a higher layer.

As one embodiment, when the first node does not send a PUSCH on the first cell between the first signal and the first time unit set, the first component depends on a first parameter, and the first parameter is provided by a higher layer.

As one embodiment, a characteristic of the above method comprises: when the first node does not perform uplink transmission or does not send a PUSCH on the first cell between the first signal and the first time unit set, the first signal adopts the power control adjustment state of a PUSCH scheduled by RAR or a PUSCH of the Type 2 random-access process; and the above method improves the robustness of uplink transmission and reduces interference.

As one embodiment, when the first node performs uplink transmission on the first cell between the first signal and the first time unit set, the value of the first component is configurable.

As one embodiment, when the first node sends a PUSCH on the first cell between the first signal and the first time unit set, the value of the first component is configurable.

As one embodiment, when the first node performs uplink transmission on the first cell between the first signal and the first time unit set, the value of the first component is mutable.

As one embodiment, when the first node sends a PUSCH on the first cell between the first signal and the first time unit set, the value of the first component is mutable.

As one embodiment, when the first node performs uplink transmission on the first cell between the first signal and the first time unit set, the first component depends on the sum of the plurality of TPC command values.

As one embodiment, when the first node sends a PUSCH on the first cell between the first signal and the first time unit set, the first component depends on the sum of the plurality of TPC command values.

As one embodiment, when the first node performs uplink transmission on the first cell between the first signal and the first time unit set, the first component does not depend on a first parameter, and the first parameter is provided by a higher layer.

As one embodiment, when the first node sends a PUSCH on the first cell between the first signal and the first time unit set, the first component does not depend on a first parameter, and the first parameter is provided by a higher layer.

As one embodiment, when the first signal occupies the first uplink symbol after the first time unit set, the first component is reset.

As one sub-embodiment of the above embodiment, the first component is reset to 0.

As one embodiment, when the first signal occupies the first uplink symbol after the first time unit set, the value of the first component is fixed.

As one sub-embodiment of the above embodiment, the first component is fixed at 0.

As one embodiment, the word "fixed" means: non-configurable.

As one embodiment, the word "fixed" means: immutable.

As one embodiment, when the first signal occupies the first uplink symbol after the first time unit set, the first component does not depend on the sum of the plurality of TPC command values.

As one embodiment, when the first signal occupies the first uplink symbol after the first time unit set, the first component depends on a first parameter, and the first parameter is provided by a higher layer.

As one embodiment, when the first signal does not occupy the first uplink symbol after the first time unit set, the value of the first component is configurable.

As one embodiment, when the first signal does not occupy the first uplink symbol after the first time unit set, the first component depends on the sum of the plurality of TPC command values.

As one embodiment, when the first signal does not occupy the first uplink symbol after the first time unit set, the first component does not depend on a first parameter, and the first parameter is provided by a higher layer.

As one embodiment, when the first signal occupies the first uplink slot after the first time unit set, the first component is reset.

As one sub-embodiment of the above embodiment, the first component is reset to 0.

As one embodiment, when the first signal occupies the first uplink slot after the first time unit set, the value of the first component is fixed.

As one sub-embodiment of the above embodiment, the first component is fixed at 0.

As one embodiment, when the first signal occupies the first uplink slot after the first time unit set, the first component does not depend on the sum of the plurality of TPC command values.

As one embodiment, when the first signal occupies the first uplink slot after the first time unit set, the first component depends on a first parameter, and the first parameter is provided by a higher layer.

As one embodiment, when the first signal does not occupy the first uplink slot after the first time unit set, the value of the first component is configurable.

As one embodiment, when the first signal does not occupy the first uplink slot after the first time unit set, the first component depends on the sum of the plurality of TPC command values.

As one embodiment, when the first signal does not occupy the first uplink slot after the first time unit set, the first component does not depend on a first parameter, and the first parameter is provided by a higher layer.

As one embodiment, when the length of the first time unit set is greater than the first threshold and the first node does not perform uplink transmission on the first cell between the first signal and the first time unit set, the first component is reset.

As one embodiment, when the length of the first time unit set is greater than the first threshold and the first node does not perform uplink transmission on the first cell between the first signal and the first time unit set, the first component does not depend on the sum of the plurality of TPC command values.

As one embodiment, when the length of the first time unit set is greater than the first threshold and the first node does not perform uplink transmission on the first cell between the first signal and the first time unit set, the first component depends on a first parameter, and the first parameter is provided by a higher layer.

As one embodiment, when the length of the first time unit set is less than the first threshold, or the first node performs uplink transmission on the first cell between the first signal and the first time unit set, the first component depends on the sum of the plurality of TPC command values.

As one embodiment, when the length of the first time unit set is greater than the first threshold and the first node does not send a PUSCH on the first cell between the first signal and the first time unit set, the first component is reset.

As one embodiment, when the length of the first time unit set is greater than the first threshold and the first node does not send a PUSCH on the first cell between the first signal and the first time unit set, the first component does not depend on the sum of the plurality of TPC command values.

As one embodiment, when the length of the first time unit set is greater than the first threshold and the first node does not send a PUSCH on the first cell between the first signal and the first time unit set, the first component depends on a first parameter, and the first parameter is provided by a higher layer.

As one embodiment, when the length of the first time unit set is less than the first threshold, or the first node sends a PUSCH on the first cell between the first signal and the first time unit set, the first component depends on the sum of the plurality of TPC command values.

As one embodiment, before a power control adjustment state is reset, the first component is fixed at 0.

As one embodiment, before a power control adjustment state is reset, the first component does not depend on the sum of the plurality of TPC command values.

As one embodiment, before a power control adjustment state is reset, the first component depends on a first parameter, and the first parameter is provided by a higher layer.

As one embodiment, after a power control adjustment state is reset, the value of the first component is mutable.

As one embodiment, after a power control adjustment state is reset, the first component depends on the sum of the plurality of TPC command values.

As one embodiment, after a power control adjustment state is reset, the first component does not depend on the first parameter.

As one embodiment, before a higher layer provides the configuration of P0 or alpha, the first component is fixed at 0.

As one embodiment, before a higher layer provides the reconfiguration of P0 or alpha, the first component is fixed at 0.

As one embodiment, before a higher layer provides the configuration of P0 or alpha, the first component does not depend on the sum of the plurality of TPC command values.

As one embodiment, before a higher layer provides the reconfiguration of P0 or alpha, the first component does not depend on the sum of the plurality of TPC command values.

As one embodiment, before a higher layer provides the configuration of P0 and alpha, or before a higher layer provides the reconfiguration of P0 and alpha, the first component depends on a first parameter, and the first parameter is provided by a higher layer.

As one embodiment, after a higher layer provides the configuration of P0 or alpha, the value of the first component is mutable.

As one embodiment, after a higher layer provides the reconfiguration of P0 or alpha, the value of the first component is mutable.

As one embodiment, after a higher layer provides the configuration of P0 or alpha, the first component depends on the sum of the plurality of TPC command values.

As one embodiment, after a higher layer provides the reconfiguration of P0 or alpha, the first component depends on the sum of the plurality of TPC command values.

As one embodiment, after a higher layer provides the configuration of P0 or alpha, the first component does not depend on the first parameter.

As one embodiment, after a higher layer provides the reconfiguration of P0 or alpha, the first component does not depend on the first parameter.

### Embodiment 10

Embodiment 10 illustrates a schematic diagram of a relationship between a first reference power and a first time unit set according to one embodiment of the present application, as shown in FIG. 10. In Embodiment 10, the first reference power is equal to the sum of at least two components, the at least two components comprise a second component, the second component is related to a first pathloss, a target RS resource is used by the first node to determine the first pathloss, and the target RS resource is related to the first time unit set.

As one embodiment, the RS refers to Reference Signal.

As one embodiment, the target RS resource is related to the length of the first time unit set.

As one embodiment, the target RS resource is related to whether the first node performs uplink transmission on the first cell between the first signal and the first time unit set.

As one embodiment, the target RS resource is related to whether the first node sends a PUSCH on the first cell between the first signal and the first time unit set.

As one embodiment, the target RS resource is related to whether the first signal occupies the first uplink symbol after the first time unit set.

As one embodiment, the target RS resource is related to whether the first signal occupies the first uplink slot after the first time unit set.

As one embodiment, the target RS resource depends on the first time unit set.

As one embodiment, the first time unit set is used to determine the target RS resource.

As one embodiment, the pathloss refers to pathloss.

As one embodiment, the first pathloss is equal to the transmit power of the target RS resource minus the RSRP (Reference Signal Received Power) of the target RS resource.

As one embodiment, the first pathloss is equal to the transmit power of the RS transported in the target RS resource minus the RSRP of the RS transported in the target RS resource.

As one embodiment, the unit of the first pathloss is dB.

As one embodiment, the second component depends on the first pathloss.

As one embodiment, the second component is equal to the first pathloss.

As one embodiment, the second component is equal to the product of the first pathloss and a first coefficient, and the first coefficient is a non-negative real number not greater than 1.

As one embodiment, the target RS resource is the first RS resource or the second RS resource, and either the target RS resource is the first RS resource or the second RS resource is related to the first time unit set; and the first RS resource is different from the second RS resource.

As one embodiment, either the target RS resource is the first RS resource or the second RS resource depends on the first time unit set.

As one embodiment, when the length of the first time unit set is greater than a first threshold, the target RS resource is the first RS resource.

As one embodiment, when the length of the first time unit set is not greater than the first threshold, the target RS resource is the second RS resource.

As one embodiment, when the length of the first time unit set is not less than a first threshold, the target RS resource is the first RS resource.

As one embodiment, when the length of the first time unit set is less than the first threshold, the target RS resource is the second RS resource.

As one embodiment, when the first node does not perform uplink transmission on the first cell between the first signal and the first time unit set, the target RS resource is the first RS resource.

As one embodiment, when the first node performs uplink transmission on the first cell between the first signal and the first time unit set, the target RS resource is the second RS resource.

As one embodiment, when the first node does not send a PUSCH on the first cell between the first signal and the first time unit set, the target RS resource is the first RS resource.

As one embodiment, when the first node sends a PUSCH on the first cell between the first signal and the first time unit set, the target RS resource is the second RS resource.

As one embodiment, when the first signal occupies the first uplink symbol after the first time unit set, the target RS resource is the first RS resource.

As one embodiment, when the first signal does not occupy the first uplink symbol after the first time unit set, the target RS resource is the second RS resource.

As one embodiment, when the first signal occupies the first uplink slot after the first time unit set, the target RS resource is the first RS resource.

As one embodiment, when the first signal does not occupy the first uplink slot after the first time unit set, the target RS resource is the second RS resource.

As one embodiment, when the length of the first time unit set is greater than the first threshold and the first node does not perform uplink transmission on the first cell between the first signal and the first time unit set, the target RS resource is the first RS resource.

As one embodiment, when the length of the first time unit set is less than the first threshold, or the first node performs uplink transmission on the first cell between the first signal and the first time unit set, the target RS resource is the second RS resource.

As one embodiment, when the length of the first time unit set is greater than the first threshold and the first node does not send a PUSCH on the first cell between the first signal and the first time unit set, the target RS resource is the first RS resource.

As one embodiment, when the length of the first time unit set is less than the first threshold, or the first node sends a PUSCH on the first cell between the first signal and the first time unit set, the target RS resource is the second RS resource.

As one embodiment, before a power control adjustment state is reset, the target RS resource is the first RS resource.

As one embodiment, after a power control adjustment state is reset, the target RS resource is the second RS resource.

As one embodiment, before a higher layer provides the configuration of P0 or alpha, the target RS resource is the first RS resource.

As one embodiment, before a higher layer provides the reconfiguration of P0 or alpha, the target RS resource is the first RS resource.

As one embodiment, after a higher layer provides the configuration of P0 or alpha, the target RS resource is the second RS resource.

As one embodiment, after a higher layer provides the reconfiguration of P0 or alpha, the target RS resource is the second RS resource. As one embodiment, the first RS resource is a CSI-RS (Channel Status Information-Reference Signal) resource or an SS/PBCH block (Synchronization Signal/Physical Broadcast Channel Block) resource.

As one embodiment, the second RS is a CSI-RS resource or an SS/PBCH block resource.

As one embodiment, the first RS resource and the second RS resource are identified by different RS resource indexes.

As one embodiment, the RS resource index of the first RS resource is an SSB-Index or an NZP-CSI-RS-ResourceId, and the RS resource index of the second RS resource is an SSB-Index or an NZP-CSI-RS-ResourceId.

As one embodiment, the first RS resource is an SS/PBCH block resource, and the second RS resource is a CSI-RS resource or a SS/PBCH block resource.

As one embodiment, the first RS resource and the second RS resource are not quasi co-located.

As one embodiment, the first RS resource and the second RS resource are not quasi co-located corresponding to QCL (Quasi co-location)-TypeD.

As one embodiment, the first RS resource is self-determined by the first node.

As one embodiment, the first RS resource is determined during a random-access process.

As one embodiment, the first RS resource is self-determined by the first node during a random-access process.

As one embodiment, the first RS resource is an RS resource associated with PRACH transmission.

As one embodiment, the first RS resource is an SS/PBCH block resource associated with PRACH transmission.

As one embodiment, the second RS resource block is configured for or indicated to the first node.

As one embodiment, the second RS resource is configured by a higher layer signaling.

As one embodiment, the second RS resource is configured by an RRC signaling.

As an example, the second RS resource is a pathloss RS configured for a first SRI (Sounding Reference Signal Resource Indicator), the first signal is transported on a PUSCH, and the scheduling DCI of the first signal indicates the first SRI.

As one embodiment, the second RS resource is a pathloss RS configured for a first TCI (Transmission Configuration Indicator), and the TCI state of the first signal is the first TCI.

As one embodiment, the second RS resource is indicated by DCI.

As one embodiment, the second RS resource is indicated by DCI through indicating the SRI or the TCI.

As one embodiment, the first reference power is equal to the sum of at least two components, wherein the at least two components comprise a second component, the second component is linearly related to the first pathloss, and a linear coefficient between the second component and the first pathloss is related to the first time unit set.

As one embodiment, the linear coefficient between the second component and the first pathloss depends on the first time unit set.

As one embodiment, the first time unit set is used to determine the linear coefficient between the second component and the first pathloss.

As one embodiment, when the length of the first time unit set is greater than a first threshold, the linear coefficient between the second component and the first pathloss is fixed at 1.

As one embodiment, when the length of the first time unit set is not less than a first threshold, the linear coefficient between the second component and the first pathloss is fixed at 1.

As one embodiment, when the length of the first time unit set is not greater than the first threshold, the linear coefficient between the second component and the first pathloss is configurable.

As one embodiment, when the length of the first time unit set is less than the first threshold, the linear coefficient between the second component and the first pathloss is configurable.

As one embodiment, when the first node does not perform uplink transmission on the first cell between the first signal and the first time unit set, the linear coefficient between the second component and the first pathloss is fixed at 1.

As one embodiment, when the first node performs uplink transmission on the first cell between the first signal and the first time unit set, the linear coefficient between the second component and the first pathloss configurable.

As one embodiment, when the first node does not send a PUSCH on the first cell between the first signal and the first time unit set, the linear coefficient between the second component and the first pathloss is fixed at 1.

As one embodiment, when the first node sends a PUSCH on the first cell between the first signal and the first time unit set, the linear coefficient between the second component and the first pathloss is configurable.

As one embodiment, when the first signal occupies the first uplink symbol after the first time unit set, the linear coefficient between the second component and the first pathloss is fixed at 1.

As one embodiment, when the first signal does not occupy the first uplink symbol after the first time unit set, the linear coefficient between the second component and the first pathloss is configurable.

As one embodiment, when the first signal occupies the first uplink slot after the first time unit set, the linear coefficient between the second component and the first pathloss is fixed at 1.

As one embodiment, when the first signal does not occupy the first uplink slot after the first time unit set, the linear coefficient between the second component and the first pathloss is configurable.

As one embodiment, the phrase "being fixed at 1" means: non-configurable.

As one embodiment, the phrase "being fixed at 1" means: immutable.

As one embodiment, the phrase "configurable" refers to: configured by an RRC signaling.

As one embodiment, the phrase "configurable" refers to: configured by an RRC IE.

### Embodiment 11

Embodiment 11 illustrates a schematic diagram of a first reference power according to one embodiment of the present application, as shown in FIG. 11. In Embodiment 11, the first reference power is equal to the sum of at least two components.

As one embodiment, the at least two components are composed of a second component and a third component, wherein the second component is a pathloss in dB, and the third component is a target received power.

As one embodiment, the at least two components are composed of a first component, a second component, a third component, a fourth component, and a fifth component, wherein the first component is a power control adjustment state, the second component is related to one pathloss, the third component is P0, the fourth component is related to the bandwidth allocated to the first signal, which is represented as the number of RBs, and the fifth component is related to at least one of the number of REs occupied by the first signal or a size of each code block in the TB carried by the first signal.

As one sub-embodiment of the above embodiment, the third component is *P*_{0_*PUSCH,b,f,c*}(*j*)*.*

As one sub-embodiment of the above embodiment, the second component is equal to the product of a pathloss in dB and a non-negative real number not greater than 1.

As one embodiment, the at least two components are composed of a first component, a second component, a third component, a fourth component, a fifth component, and a sixth component, wherein the first component is a power control adjustment state, the second component is related to one pathloss, the third component is PO, the fourth component is related to the bandwidth allocated to the first signal, which is represented as the number of RBs, the fifth component is related to at least one of the number of symbols occupied by the first signal, the number of REs occupied by the first signal, or the number of bits of UCI (Uplink Control Information) carried by the first signal, and the sixth component is related to a format of the PUCCH that bears the first signal.

As one sub-embodiment of the above embodiment, the third component is P_{0*_PUCCH,b,f,c*}(*qᵤ*)*.*

As one sub-embodiment of the above embodiment, the second component is a pathloss in dB.

As one embodiment, the third component is a PRACH target received power.

As one embodiment, the third component is a target received power.

As one embodiment, the third component is P0.

As one embodiment, the third component is P0 for uplink power control.

As one embodiment, the third component is P0 for PUSCH power control.

As one embodiment, the third component is P0 for PUCCH power control.

As one embodiment, the third component is PO for SRS power control.

As one embodiment, the third component is one of *P*_{0_*PUSCH,b,f,c*}(*j*), *P*_{0_*PUCCH,b,f,c*}(q*ᵤ*), or *P*_{0_*SRS,b,f,c*}(*qₛ*).

As one embodiment, the third component is one of *P*₀*_{_PUSCH,b,f,c}(j), P*_{0_*PUCCH,b,f,c*}(*qᵤ*), *P*_{0_*SRS,b,f,c*}(*qₛ*), or *P_{PRACH,target,f,c}.*

As one embodiment, the third component is provided by a higher layer.

As one embodiment, the third component depends on p0 in P0-PUSCH-AlphaSet, P0-PUCCH, or SRS-ResourceSet.

As one embodiment, the fifth component is Δ*_{TF,b,f,c}*(*i*)*.*

As one embodiment, the definition of the Δ*_{TF,b,f,c}*(*i*) refers to 3GPP TS38.213.

As one embodiment, the fifth component is related to an MCS of the first signal.

As one embodiment, the fifth component is related to both the number of REs occupied by the first signal and a size of each code block in the TB carried by the first signal.

As one embodiment, the fifth component is related to the number of bits of UCI carried by the first signal.

As one embodiment, the first component is related to a format of the PUCCH that bears the first signal.

As one embodiment, the sixth component is Δ*_{F_PUCCH}*(*F*).

As one embodiment, the definition of the *Δ_{F_PUCCH}*(*F*) refers to 3GPP TS38.213.

### Embodiment 12

Embodiment 12 illustrates a schematic diagram of a relationship between a first reference power and a first time unit set according to one embodiment of the present application, as shown in FIG. 12. In Embodiment 12, first DCI is used to determine a time domain resource occupied by the first signal; and the first DCI comprises a first field, and whether the first reference power depends on the first field in the first DCI is related to the first time unit set.

As one embodiment, whether the first reference power depends on the first field in the first DCI is related to the length of the first time unit set.

As one embodiment, whether the first reference power depends on the first field in the first DCI is related to whether the first node performs uplink transmission on the first cell between the first signal and the first time unit set.

As one embodiment, whether the first reference power depends on the first field in the first DCI is related to whether the first node sends a PUSCH on the first cell between the first signal and the first time unit set.

As one embodiment, whether the first reference power depends on the first field in the first DCI is related to whether the first signal occupies a first uplink symbol after the first time unit set.

As one embodiment, whether the first reference power depends on the first field in the first DCI is related to whether the first signal occupies a first uplink slot after the first time unit set.

As one embodiment, the first time unit set is used to determine whether the first reference power depends on the first field in the first DCI.

As one embodiment, the first signal is transported on the PUSCH, and the first DCI is used to schedule the first signal.

As one embodiment, the first signal is transported on the PUSCH, and the first DCI comprises scheduling information of the first signal.

As one sub-embodiment of the above embodiment, the first DCI is one of DCI format 0_0, DCI format 0_1, or DCI format 0_2.

As one embodiment, the scheduling information comprises one or more of a time domain resource, a frequency domain resource, an MCS, a DMRS (DeModulation Reference Signals) port, an HARQ (Hybrid Automatic Repeat Request) process number, an RV (Redundancy Version), an NDI (New Data Indicator), a TCI state, or an SRI.

As one embodiment, the first signal is transported on the PUCCH, the first DCI is used to schedule the first PDSCH, and the first signal carries HARQ-ACK (acknowledgement) information for the first PDSCH.

As one sub-embodiment of the above embodiment, the first DCI is one of DCI format 1_0, DCI format 1_1, or DCI format 1_2.

As one sub-embodiment of this embodiment, the first DCI comprises scheduling information of the first PDSCH.

As one embodiment, the first signal comprises an SRS, and the first DCI is used to trigger the first signal.

As one embodiment, the first DCI indicates a time domain resource occupied by the first signal.

As one embodiment, the DCI field Time domain resource assignment of the first DCI indicates the time domain resource occupied by the first signal.

As one embodiment, the first field comprises at least one DCI field.

As one embodiment, the first field comprises all or part of the bits in one DCI field.

As one embodiment, the first field is one DCI field.

As one embodiment, the first field is the DCI field TPC command for scheduled PUSCH.

As one embodiment, the first signal is transported on the PUSCH, the first field is the DCI field TPC command for scheduled PUSCH.

As one embodiment, the first field is the DCI field TPC command for scheduled PUCCH.

As one embodiment, the first signal is transported on the PUCCH, the first field is the DCI field TPC command for scheduled PUCCH.

As one embodiment, the first field in the first DCI indicates one TPC command.

As one embodiment, the first field in the first DCI indicates one TPC command value.

As one embodiment, the value of the first field in the first DCI is mapped to one TPC command value.

As one embodiment, one TPC command value is a real number.

As one embodiment, one TPC command value is an integer.

As one embodiment, the unit of one TPC command value is dB.

As one embodiment, when the length of the first time unit set is greater than a first threshold, the first reference power does not depend on the first field in the first DCI.

As one embodiment, when the length of the first time unit set is not less than a first threshold, the first reference power does not depend on the first field in the first DCI.

As one embodiment, a characteristic of the above method comprises: after the first node does not send a PUSCH in a time unit set whose length is greater than or not less than the first threshold, power control of the first signal does not depend on the TPC command indicated by the first DCI; and the benefits of the above method comprise: avoiding the negative impact of inaccurate TPC, improving the reliability of uplink transmission, and reducing interference.

As one embodiment, when the length of the first time unit set is not greater than the first threshold, the first reference power depends on the first field in the first DCI.

As one embodiment, when the length of the first time unit set is less than the first threshold, the first reference power depends on the first field in the first DCI.

As one embodiment, when the first node does not perform uplink transmission on the first cell between the first signal and the first time unit set, the first reference power does not depend on the first field in the first DCI.

As one embodiment, when the first node does not send a PUSCH on the first cell between the first signal and the first time unit set, the first reference power does not depend on the first field in the first DCI.

As one embodiment, a characteristic of the above method comprises: when the first node does not perform uplink transmission or does not send a PUSCH on the first cell between the first signal and the first time unit set, power control of the first signal does not depend on the TPC command indicated by the first DCI; and the above method avoids the negative impact of inaccurate TPC, improves the reliability of uplink transmission, and reduces interference.

As one embodiment, when the first node performs uplink transmission on the first cell between the first signal and the first time unit set, the first reference power depends on the first field in the first DCI.

As one embodiment, when the first node sends a PUSCH on the first cell between the first signal and the first time unit set, the first reference power depends on the first field in the first DCI.

As one embodiment, when the first signal occupies the first uplink symbol after the first time unit set, the first reference power does not depend on the first field in the first DCI.

As one embodiment, when the first signal does not occupy the first uplink symbol after the first time unit set, the first reference power depends on the first field in the first DCI.

As one embodiment, when the first signal occupies the first uplink slot after the first time unit set, the first reference power does not depend on the first field in the first DCI.

As one embodiment, when the first signal does not occupy the first uplink slot after the first time unit set, the first reference power depends on the first field in the first DCI.

As one embodiment, when the length of the first time unit set is greater than the first threshold and the first node does not perform uplink transmission on the first cell between the first signal and the first time unit set, the first reference power does not depend on the first field in the first DCI.

As one embodiment, when the length of the first time unit set is less than the first threshold, or the first node performs uplink transmission on the first cell between the first signal and the first time unit set, the first reference power depends on the first field in the first DCI.

As one embodiment, when the length of the first time unit set is greater than the first threshold and the first node does not send a PUSCH on the first cell between the first signal and the first time unit set, the first reference power does not depend on the first field in the first DCI.

As one embodiment, when the length of the first time unit set is less than the first threshold, or the first node sends a PUSCH on the first cell between the first signal and the first time unit set, the first reference power depends on the first field in the first DCI.

As one embodiment, before a power control adjustment state is reset, the first reference power does not depend on the first field in the first DCI.

As one embodiment, after a power control adjustment state is reset, the first reference power depends on the first field in the first DCI.

As one embodiment, before a higher layer provides the configuration of P0 or alpha, the first reference power does not depend on the first field in the first DCI.

As one embodiment, before a higher layer provides the reconfiguration of P0 or alpha, the first reference power does not depend on the first field in the first DCI.

As one embodiment, after a higher layer provides the configuration of P0 or alpha, the first reference power depends on the first field in the first DCI.

As one embodiment, after a higher layer provides the reconfiguration of P0 or alpha, the first reference power depends on the first field in the first DCI.

As one embodiment, the sentence "the first reference power depends on the first field in the first DCI" means that the first reference power depends on the first field in the first DCI indicating one TPC command value.

As one embodiment, the sentence "the first reference power depends on the first field in the first DCI" means that the first reference power is linearly related to one TPC command value indicated by the first field in the first DCI, and a linear coefficient between the first reference power and one TPC command value indicated by the first field in the first DCI is equal to 1.

As one embodiment, the sentence "the first reference power depends on the first field in the first DCI" means that the at least two components comprise the first component, and the first component depends on the first field in the first DCI.

As one sub-embodiment of the above embodiment, the first component is equal to the sum of K1 TPC command values, wherein K1 is a positive integer; and the K1 TPC commands comprise one TPC command indicated by the first field in the first DCI.

### Embodiment 13

Embodiment 13 illustrates a schematic diagram in which a value of a first field in first DCI is related to a first time unit set according to one embodiment of the present application, as shown in FIG. 13.

As one embodiment, the value of the first field in the first DCI is related to a length of the first time unit set.

As one embodiment, the value of the first field in the first DCI is related to whether the first node performs uplink transmission on the first cell between the first signal and the first time unit set.

As one embodiment, the value of the first field in the first DCI is related to whether the first node sends a PUSCH on the first cell between the first signal and the first time unit set.

As one embodiment, the value of the first field in the first DCI is related to whether the first signal occupies a first uplink symbol after the first time unit set.

As one embodiment, the value of the first field in the first DCI is related to whether the first signal occupies a first uplink slot after the first time unit set.

As one embodiment, the value of the first field in the first DCI depends on the first time unit set.

As one embodiment, the first time unit set is used to determine the value of the first field in the first DCI.

As one embodiment, when the length of the first time unit set is greater than a first threshold, the value of the first field in the first DCI is default.

As one embodiment, when the length of the first time unit set is greater than a first threshold, the value of the first field in the first DCI is reserved.

As one embodiment, when the length of the first time unit set is greater than a first threshold, the first node ignores the first field in the first DCI.

As one embodiment, when the length of the first time unit set is not less than a first threshold, the value of the first field in the first DCI is default.

As one embodiment, when the length of the first time unit set is not less than a first threshold, the value of the first field in the first DCI is reserved.

As one embodiment, when the length of the first time unit set is not less than a first threshold, the first node ignores the first field in the first DCI.

As one embodiment, when the first node does not perform uplink transmission on the first cell between the first signal and the first time unit set, the value of the first field in the first DCI is default.

As one embodiment, when the first node does not perform uplink transmission on the first cell between the first signal and the first time unit set, the first node ignores the first field in the first DCI.

As one embodiment, when the first node does not send a PUSCH on the first cell between the first signal and the first time unit set, the value of the first field in the first DCI is default.

As one embodiment, when the first node does not send a PUSCH on the first cell between the first signal and the first time unit set, the first node ignores the first field in the first DCI.

As one embodiment, when the first signal occupies the first uplink symbol after the first time unit set, the value of the first field in the first DCI is default.

As one embodiment, when the first signal occupies the first uplink symbol after the first time unit set, the first node ignores the first field in the first DCI.

As one embodiment, when the first signal occupies the first uplink slot after the first time unit set, the value of the first field in the first DCI is default.

As one embodiment, when the first signal occupies the first uplink slot after the first time unit set, the first node ignores the first field in the first DCI.

As one embodiment, the meaning of the default means: being fixed.

As one embodiment, the meaning of the default means: being fixed at 0.

As one embodiment, the meaning of the default means: immutable.

### Embodiment 14

Embodiment 14 illustrates a structural block diagram of a processing device used in a first node according to one embodiment of the present application, as shown in FIG. 14. In

FIG. 14, a processing apparatus 1400 in the first node comprises a first receiver 1401 and a first transmitter 1402.

In Embodiment 14, the first receiver 1401 receives a first information block; and the first transmitter 1402 sends a first signal on a first cell after the first time unit set.

In embodiment 14, the first information block is used to determine the first time unit set; and transmit power of the first signal is the smallest value between a first reference power and a first power threshold, the first reference power depends on the first time unit set, and the first node does not send at least a PUSCH on the first cell in the first time unit set.

As one embodiment, the first reference power is equal to the sum of at least two components, and whether the at least two components comprise a first component depends on the first time unit set.

As one embodiment, the first reference power is equal to the sum of at least two components, the at least two components comprise the first component, and the first component depends on the first time unit set.

As one embodiment, the first reference power is equal to the sum of at least two components, the at least two components comprise a second component, the second component is related to a first pathloss, a target RS resource is used to determine the first pathloss, and the target RS resource is related to the first time unit set.

As one embodiment, the first receiver 1401 receives first DCI, wherein the first DCI is used to determine a time domain resource occupied by the first signal, wherein the first DCI comprises a first field, and whether the first reference power depends on the first field in the first DCI is related to the first time unit set.

As one embodiment, a value of the first field in the first DCI is related to the first time unit set.

As one embodiment, the first node device is user equipment.

As one embodiment, the first node device is a relay node device.

As one embodiment, the time unit refers to a symbol or a slot; and the first component is a power control adjustment state.

As one embodiment, the first node considers that a signal sent on the first cell in the first time unit set will not be received or processed.

As one embodiment, the first node considers that a signal sent on the first cell in a first time unit subset in the first time unit set will not be received or processed, and a signal sent on the first cell in at least one time unit of the first time unit set that does not belong to the first time unit subset will be received and/or processed.

As one embodiment, the first receiver 1401 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1402 comprises at least one of {the antenna 452, a transmitting device 454, a transmitting processor 468, a multi-antenna transmitting processor 457, the controller/processor 459, the memory 460, and the data source 467} in Embodiment 4.

### Embodiment 15

Embodiment 15 illustrates a structural block diagram of a processing device used in a second node according to one embodiment of the present application, as shown in FIG. 15. In FIG. 15, the processing device 1500 in the second node comprises a second transmitter 1501 and a second receiver 1502.

In Embodiment 15, the second transmitter 1501 sends a first information block; and a second receiver 1502 receives a first signal on a first cell after the first time unit set.

In embodiment 15, the first information block is used to determine the first time unit set; and transmit power of the first signal is the smallest value between a first reference power and a first power threshold, the first reference power depends on the first time unit set, and a sender of the first signal does not send at least a PUSCH on the first cell in the first time unit set.

As one embodiment, the first reference power is equal to the sum of at least two components, and whether the at least two components comprise a first component depends on the first time unit set.

As one embodiment, the first reference power is equal to the sum of at least two components, the at least two components comprise the first component, and the first component depends on the first time unit set.

As one embodiment, the first reference power is equal to the sum of at least two components, the at least two components comprise a second component, the second component is related to a first pathloss, a target RS resource is used to determine the first pathloss, and the target RS resource is related to the first time unit set.

As one embodiment, the second transmitter 1501 sends first DCI, wherein the first DCI is used to determine a time domain resource occupied by the first signal, wherein the first DCI comprises a first field, and whether the first reference power depends on the first field in the first DCI is related to the first time unit set.

As one embodiment, a value of the first field in the first DCI is related to the first time unit set.

As one embodiment, the second node is a base station device.

As one embodiment, the second node is user equipment.

As one embodiment, the second node is a relay node device.

As one embodiment, the time unit refers to a symbol or a slot; and the first component is a power control adjustment state.

As one embodiment, the first node considers that a signal sent on the first cell in the first time unit set will not be received or processed.

As one embodiment, the first node considers that a signal sent on the first cell in a first time unit subset in the first time unit set will not be received or processed, and a signal sent on the first cell in at least one time unit of the first time unit set that does not belong to the first time unit subset will be received and/or processed.

As one embodiment, the second transmitter 1501 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1502 comprises at least one of {the antenna 420, a receiving device 418, a receiving processor 470, a multi-antenna receiving processor 472, the controller/processor 475, and the memory 476} in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include, but are not limited to, drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or system devices in the present application include, but are not limited to, macrocell base stations, microcell base stations, small cell base stations, femtocells, relay base stations, eNBs, gNBs, TRPs (Transmitter Receiver Points), GNSSs, relay satellites, satellite base stations, aerial base stations, RSUs (Road Side Units), drones, test devices, and wireless communication devices such as transceiving apparatuses or signaling testers that simulate some functions of base stations.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node used for wireless communication, comprising:
a first receiver receiving a first information block, the first information block being used to determine a first time unit set; and
a first transmitter sending a first signal on a first cell after the first time unit set,
wherein transmit power of the first signal is the smallest value between a first reference power and a first power threshold, the first reference power depends on the first time unit set, and the first node does not send at least a PUSCH on the first cell in the first time unit set.

2. The first node according to claim 1, wherein the first reference power is equal to the sum of at least two components, and whether the at least two components comprise a first component depends on the first time unit set.

3. The first node according to claim 1 or 2, wherein the first reference power is equal to the sum of at least two components, the at least two components comprise the first component, and the first component depends on the first time unit set.

4. The first node according to any one of claims 1 to 3, wherein the first reference power is equal to the sum of at least two components, the at least two components comprise a second component, the second component is related to a first pathloss, a target RS resource is used to determine the first pathloss, and the target RS resource is related to the first time unit set.

5. The first node according to any one of claims 1 to 4, wherein the first receiver receives first DCI, and the first DCI is used to determine a time domain resource occupied by the first signal, wherein the first DCI comprises a first field, and whether the first reference power depends on the first field in the first DCI is related to the first time unit set.

6. The first node according to claim 5, wherein a value of the first field in the first DCI is related to the first time unit set.

7. A second node used for wireless communication, comprising:
a second transmitter sending a first information block, the first information block being used to determine a first time unit set; and
a second receiver receiving a first signal on a first cell after the first time unit set,
wherein transmit power of the first signal is the smallest value between a first reference power and a first power threshold, the first reference power depends on the first time unit set, and a sender of the first signal does not send at least a PUSCH on the first cell in the first time unit set.

8. The second node according to claim 7, wherein the first reference power is equal to the sum of at least two components, and whether the at least two components comprise a first component depends on the first time unit set.

9. The second node according to claim 7 or 8, wherein the first reference power is equal to the sum of at least two components, the at least two components comprise the first component, and the first component depends on the first time unit set.

10. The second node according to any one of claims 7 to 9, wherein the first reference power is equal to the sum of at least two components, the at least two components comprise a second component, the second component is related to a first pathloss, a target RS resource is used to determine the first pathloss, and the target RS resource is related to the first time unit set.

11. The second node according to any one of claims 7 to 10, wherein the second transmitter sends first DCI, and the first DCI is used to determine a time domain resource occupied by the first signal, wherein the first DCI comprises a first field, and whether the first reference power depends on the first field in the first DCI is related to the first time unit set.

12. The second node according to claim 11, wherein a value of the first field in the first DCI is related to the first time unit set.

13. A method used in a first node for wireless communication, comprising:
receiving a first information block, the first information block being used to determine a first time unit set; and
sending a first signal on a first cell after the first time unit set,
wherein transmit power of the first signal is the smallest value between a first reference power and a first power threshold, the first reference power depends on the first time unit set, and the first node does not send at least a PUSCH on the first cell in the first time unit set;
receiving a first information block, the first information block being used to determine a first time unit set; and
sending a first signal on a first cell after the first time unit set,
wherein transmit power of the first signal is the smallest value between a first reference power and a first power threshold, the first reference power depends on the first time unit set, and the first node does not send at least a PUSCH on the first cell in the first time unit set.

14. The method according to claim 13, wherein the first reference power is equal to the sum of at least two components, and whether the at least two components comprise a first component depends on the first time unit set.

15. The method according to claim 13 or 14, wherein the first reference power is equal to the sum of at least two components, the at least two components comprise the first component, and the first component depends on the first time unit set.

16. The method according to any one of claims 13 to 15, wherein the first reference power is equal to the sum of at least two components, the at least two components comprise a second component, the second component is related to a first pathloss, a target RS resource is used to determine the first pathloss, and the target RS resource is related to the first time unit set.

17. The method according to any one of claims 13 to 16, comprising:
receiving first DCI, wherein the first DCI is used to determine a time domain resource occupied by the first signal,
wherein the first DCI comprises a first field, and whether the first reference power depends on the first field in the first DCI is related to the first time unit set.

18. The method according to claim 17, wherein a value of the first field in the first DCI is related to the first time unit set.

19. A method used in a second node for wireless communication, comprising:
sending a first information block, the first information block being used to determine a first time unit set; and
receiving a first signal on a first cell after the first time unit set,
wherein transmit power of the first signal is the smallest value between a first reference power and a first power threshold, the first reference power depends on the first time unit set, and a sender of the first signal does not send at least a PUSCH on the first cell in the first time unit set.

20. The method according to claim 19, wherein the first reference power is equal to the sum of at least two components, and whether the at least two components comprise a first component depends on the first time unit set.

21. The method according to claim 19 or 20, wherein the first reference power is equal to the sum of at least two components, the at least two components comprise the first component, and the first component depends on the first time unit set.

22. The method according to any one of claims 19 to 21, wherein the first reference power is equal to the sum of at least two components, the at least two components comprise a second component, the second component is related to a first pathloss, a target RS resource is used to determine the first pathloss, and the target RS resource is related to the first time unit set.

23. The method according to any one of claims 19 to 22, comprising:
sending first DCI, wherein the first DCI is used to determine a time domain resource occupied by the first signal,
wherein the first DCI comprises a first field, and whether the first reference power depends on the first field in the first DCI is related to the first time unit set.

24. The method according to claim 23, wherein a value of the first field in the first DCI is related to the first time unit set.
